# EUROPÄISCHE PATENTSCHRIFT

(11) **EP 2 274 971 B1**
(45) Veröffentlichungstag und Bekanntmachung des Hinweises auf die Patenterteilung: **25.06.2014**
(21) Anmeldenummer: 10007203.2
(22) Anmeldetag: 13.07.2010
(51) Int. Cl.: A01G 9/12, A01G 13/00

(54) **Rank- und Bewässerungsvorrichtung**
Plant support and irrigation device
Dispositif de tuteurage et d'irrigation

(30) Priorität: 14.07.2009 DE 102009033264; 02.09.2009 DE 102009039730; 14.09.2009 DE 102009041465
(43) Veröffentlichungstag der Anmeldung: 19.01.2011
(73) Patentinhaber: Fuchs, Alfred, 78467 Konstanz (DE)
(72) Erfinder: Fuchs, Alfred, 78467 Konstanz (DE)
(74) Vertreter: Wagner, Kilian

(56) Entgegenhaltungen:
- CH-A- 296 280
- DE-A1- 10 251 011
- DE-A1- 19 700 612
- DE-A1- 19 742 247
- JP-A- 8 140 502

## Beschreibung

Die Erfindung betrifft eine Rank- und Bewässerungsvorrichtung, insbesondere einen Pflanzturm, für Pflanzen. In systematischer Weiterbildung wird aus den Grundelementen der Rank- und Bewässerungsvorrichtung ein modular aufgebautes Gewächshaus erzeugt, bei welchem das auf die Dachelemente fallendes Regenwasser direkt zu den Wurzeln der Pflanzen geführt wird.

Bekannt ist es, Rank- und Kletterpflanzen sogenannte Rankstöcke zur Verfügung zu stellen, an denen die Pflanzen entlangranken bzw. klettern können. Derartige Rankstöcke werden sowohl im Freiland als auch in Gewächshäusern eingesetzt. Problematisch bei bekannten Rankstöcken ist, dass in der Regel eine künstliche Bewässerung realisiert sein muss, da die auf natürlichem Weg zum Wurzelwerk dringende Wassermenge zu gering ist.

Bekannte Rankstöcke sind meist als konisch angespitzte Holzstöcke ausgebildet. Der Nachteil dieser als Rankvorrichtungen dienenden Holzstöcke ist deren geringe Haltbarkeit. Häufig sind zudem die Spitzen nicht ausreichend spitz, wodurch die bekannten Holzstöcke nur mit hohem Kraftaufwand in das Erdreich gerammt werden können. Darüber hinaus brechen die Holzspitzen leicht ab und müssen immer wieder aufwändig manuell nachgespitzt werden. Ferner ist der bekannte Stock aus Holz porös und bietet somit Schädlingen und Fäulnis gute Nist- bzw. Überlebensmöglichkeiten. Auch sind bekannte Holzstöcke nicht mit seitlichen Ausbuchtungen versehen, in die Pflanzenhalter oder Rankdrähte eingehängt werden könnten. Auch sind bekannte Holzstöcke meist konisch ausgebildet, wodurch eine einfach verschiebbare, quasi mit wachsende Pflanzenführung mit einmalig festgelegtem Durchmesser nicht einsetzbar ist und den Aufwand zur Stabilisierung der Rankgewächse erhöht.

Aus der DE 197 00 612 A1 ist eine Wuchshilfe für Pflanzen bekannt, wobei ein die Pflanze überdeckender Schirm von einem einzigen massiven Träger getragen ist.

Aus der CH 296 280 A ist eine alternative Pflanzenüberdachung bekannt, wobei das Wasser durch Öffnungen eines schüsselförmigen Dach auf die Pflanze regnen kann.

Aus der DE 197 42 247 A1 ist ein Regenschutzdach für nässeempfindliche Zier- und Kulturpflanzen bekannt, wobei eine einzige Regenauffangwanne vorgesehen ist, die von einem einzigen, vertikalen Träger getragen ist.

Zum weiteren Stand der Technik wird auf die JP 8140502 A sowie die DE 10251011 A1 verwiesen.

Der Erfindung liegt die Aufgabe zugrunde, eine alternative haltbare Rank- und Bewässerungsvorrichtung für Pflanzen anzugeben. Bevorzugt soll diese derart ausgebildet sein, dass die Pflanzen auf natürlichem Wege mehr Wasser erhal-ten, als dies bei bekannten Rankstöcken der Fall ist. Ganz besonders bevorzugt soll die Rank- und Bewässerungsvorrichtung bei Bedarf auf einfachste Weise zu einem einfachen Gewächshaus ausgebaut werden können. Ferner besteht die Aufgabe darin, ein System, umfassend eine derartige Rank- und Bewässerungsvorrichtung, anzugeben, wobei das System den Einsatz der Rank- und Bewässerungsvorrichtung erleichtern und/oder eine erhöhte Handhabungsfunktionalität bieten soll.

Diese Aufgabe wird hinsichtlich der Rank- und Bewässerungsvorrichtung für Pflanzen mit den Merkmalen des Anspruchs 1 gelöst.

Der Erfindung liegt der Gedanke zugrunde, eine Rank- und Bewässerungsvorrichtung für Pflanzen, insbesondere für Kletterpflanzen, wie Kletterblumen, sowie für Stangenbohnen oder Tomaten, Gurken, Paprika etc. anzugeben, die sich durch eine Anzahl von metallischen Rankstöcken auszeichnen, die den Pflanzen zum einen Halt geben und die zudem eine Regenauffangwanne tragen, wobei die Regenauffangwanne, in der ersten Alternativlösung des Anspruchs 1, eine Anzahl von Durchgangslöchern aufweist, die von den Rankstöcken durchsetzt sind, wobei die Abmessungen so zu wählen sind, dass Wasser aus der Regenauffangwanne durch die Durchgangslöcher und entlang der Rankstöcke zum Wurzelwerk der an den Rankstöcken Halt findenden Pflanzen fließen kann. Auf diese Weise, wenn die Rankstöcke nicht gerade (vertikal), sondern schräg angeordnet werden, eine vergleichsweise große Wassermenge auf natürlichem Wege zu den Pflanzen gelangen und zwar zum einen die Wassermenge, die von der Regenauffangwanne aufgefangen wird, und zum anderen die Wassermenge, die seitlich der Regenwanne auf die schrägstehenden Rankstöcke auftrifft und entlang derer zum Wurzelwerk der Pflanzen strömt und der direkte Regen auch direkt auf das Wurzelwerk trifft. Auf diese Weise sind ein schnelleres Pflanzenwachstum und ein größerer Fruchtreichtum garantiert. Die Schräglage der Rankstöcke bezüglich der Vertikalen liegt im Bereich von 5° bis 25° wobei ein Winkel von 10° bezogen auf die Vertikale besonders bevorzugt ist. Darüber hinaus ist die vorzugsweise als Pflanzturm ausgebildete Rank- und Bewässerungsvorrichtung optisch ansprechend und somit eine Augenweide für jeden Pflanzen-, Blumen- und Gartenfreund. Bei einer schrägen Anordnung der Rankstöcke, derart, dass diese die Flächenerstreckung der Regenauffangwanne nach außen überragen, kann nach überschlägigen Berechnungen eine doppelt so große Wassermenge auf natürlichem Wege bereitgestellt werden, als bei bisherigen, aus dem Stand der Technik bekannten, vertikal stehenden Pflanzstöcken.

Bei der schräg gegeneinander stehenden Anordnung der, vorzugsweise aus Leichtmetall, insbesondere Aluminium oder einer Aluminiumlegierung, ausgebildeten Rankstöcken ist ein optimaler Halt des Gesamtgebildes gegeben. Gegebenenfalls können zusätzlich sogenannte Sturmspangen eingesetzt werden, die mindestens zwei Rankstöcke fest miteinander verbinden.

Die bevorzugt zum Einsatz kommenden Rankstöcke sind, insbesondere bei einer vollständigen Ausbildung aus Metall dem bekannten Holzstock weit überlegen. Bevorzugt ist der Schaft der zur Anwendung kommenden metallischen Rankstöcke aus einem Aluminiumrohr gebildet, welches vergleichsweise preisgünstig zu erhalten ist, ein geringes Gewicht aufweist und darüber hinaus noch wetterbeständig ist. Bevorzugt ist der Rankstock innen hohl oder U-förmig ausgebildet und daher bei ausreichender Kraftaufwendung leicht verformbar, wodurch die in Weiterbildung der Erfindung vorgesehenen seitlichen Einbuchtungen und Konturierungen vergleichsweise einfach realisiert werden können. Darüber hinaus sind metallische Rankstöcke im Gegensatz zu Holzstöcken nicht porös und saugen kein Wasser auf. Ganz besonders bevorzugt ist der Schaft aus einem Zylinderrohr oder U-Profil ausgebildet, welche in jeder benötigten Länge ohne wesentlichen Verschnitt zu erhalten sind. Das Zylinderrohr weist den zusätzlichen Vorteil auf, dass Pflanzenhalter vom Boden an verschiebbar und somit dem Wachstum der Pflanzen anpassbar eingesetzt werden können.

Den bekannten Eigenschaften eines Gewächshauses wie dem Schutz vor Wettersituationen wie Frost, Hagel, Starkwind und Starkregen wird der zusätzliche Vorteil der direkten Nutzung des fallenden Regenwassers hinzugefügt, wobei dem zentralen Bereich des Wurzelwerks bei Regen ein Mehrfaches an Regenwasser und bei Trockenheit gezielt und effizient Gießwasser zugeführt werden soll. Ferner wird durch die metallischen Rankstöcke und die sich näherungsweise als Flachdach ausbildende Dachform des Gewächshauses zusätzlich zur Schaffung geeigneter klimatischer Bedingungen für Pflanzen beigetragen, da durch Effekte der Wärmeübertragung über die Rankstöcke und durch Effekte des Niederschlags und der Verdunstung von Tau auf der Dachinnenseite und den Wänden besondere Temperatur- Ausgleichseffekte einstellen, welche dem gesunden Pflanzenwachstum besonders zuträglich sind und den Verbrauch von Wasser reduzieren. Insbesondere die bevorzugt schräge Anordnung der Pflanzstöcke soll bei allen Bauvarianten Vorteile in Bezug zur statischen Belastbarkeit und zur effizienteren Ausnutzung der Licht- und Platzverhältnisse sowie des Regenwassers erbringen.

Ganz besonders bevorzugt ist der Verankerungsabschnitt der Rankstöcke, wie später noch erläutert werden wird, als spitze, flache und bevorzugt scharfe, vorzugsweise aus gegen Korrosion geschütztem Metall, Aluminium bzw. einer Aluminiumlegierung ausgebildete, Erdlanze ausgebildet, die mit dem, vorzugsweise als Aluminiumrohr ausgebildeten, Schaft verpresst ist. Ganz besonders bevorzugt weist die Erdlanze als Erdeindrückhilfe bzw. Einklopfhilfe dienende Nasen auf. Diese ermöglichen ein leichtes Eindringen ins Erdreich, auch in festeres Erdreich, wie dieses beispielsweise häufig in Weinbergen zu finden ist. Die Stundeneinbringleistung kann mit einem bevorzugt zum Einsatz kommenden Rankstock gegenüber bekannten Holzstöcken mehr als das fünffache betragen.

Bei einer alternativen, besonders bevorzugten Ausführungsvariante ist die Erdlanze nicht flach und schwertartig, sondern, vorzugsweise um eine gedachte Längsmittelachse herum, gerundet, bevorzugt als Kegelschnitt, vorzugsweise im Querschnitt sichelförmig bzw. teilkreisförmig ausgebildet. Eine derartig ausgeführte Erdlanze ermöglicht den Aufbau aus einem dünnen Blech, vorzugsweise aus einem verzinkten Stahlblech oder aus einem Aluminiumblech. Ganz besonders bevorzugt ist die gerundete Erdlanze als Stanzbiegeteil ausgeführt.

In Weiterbildung der Erfindung ist mit Vorteil vorgesehen, dass die Erdlanze mit einer, vorzugsweise zumindest näherungsweise umlaufenden, als Eindrückschulter bzw. Tretschulter ausgebildeten Ringschulter ausgestattet ist, welche ein erleichtertes Eindrücken bzw. Eintreten der Erdlanze in den Boden ermöglicht. Noch weiter bevorzugt bildet die Ringschulter auf der dem Boden zugewandten Seite, also im Inneren der gerundeten Erdlanze einen Axialanschlag, der das Einbringen der Rankstöcke in eine definierte Tiefe ermöglicht. Besonders bevorzugt ist die flächige Ausbildung des Axialanschlags als abstützende bzw. statische Komponente zur Stabilisierung des einzelnen als auch im Verbund mit Auffangwannen stehenden Rankstockes auch bezüglich horizontal einwirkender Kräfte.

Besonders bevorzugt ist die Erdlanze mit dem Schaft verpresst. Hierzu umfasst die Erdlanze bevorzugt einen Fixerabschnitt, der mit Vorteil in Längsrichtung geschlitzt ausgebildet ist, so dass der Fixierabschnitt in den Schaft eingeführt werden kann. Der Axialanschlag bzw. die Tretschulter wird in Variation als entsprechend konturierte und in der Größe den Bodenverhältnissen angepasste Scheibe mit fixiert. Noch weiter bevorzugt ist der Fixierabschnitt nach radial außen federnd ausgebildet und stützt sich am Innenumfang des Schaftes (Schaftabschnittes) ab.

Wie später und in den Zeichnungen noch erläutert werden wird, können in vorteilhafter Weise in den, vorzugsweise aus Aluminium ausgebildeten, Rankstock Einbuchtungen oder Sicken eingepresst werden, welche als Pflanzenbefestigung bzw. bei Tomaten und Gurken als Stammbefestigung sowie als Anschlag für konstruktive Elemente dienen können. Die Einbuchtungen eröffnen die Möglichkeit, Halteklammern festzulegen, die die Pflanze sichern, damit diese aufgrund des Früchtegewichts nicht nach unten gleitet. Bohnen und Kletterblumen können die Einbuchtungen als Kletterhilfe nutzen.

Ein wesentlicher Vorteil eines metallischen Pflanzrohrstockes ist die Möglichkeit zur Ausbildung glatter Oberflächen, die Schädlingen kein Zuhause bietet, wodurch Spritzmittel eingespart werden können. Darüber hinaus ist vorteilhaft, dass Metallstöcke kein Wasser aufsaugen, sondern die gesamt Wassermengen nach unten zu den Wurzeln abströmen kann.

Bei Bedarf können die Rankstöcke mit einer, vorzugsweise eloxierten, Farbgebung versehen werden, wodurch die Wärmeabsorption und der Wärmeausgleich verbessert wird, was wiederum zu einem verbesserten Wachstum der Pflanzen und einer schnelleren Reife der Früchte führt.

Darüber hinaus wird darauf hingewiesen, dass durch die Ausbildung zumindest des Schaftes, vorzugsweise zusätzlich des Verankerungsabschnittes, aus Metall, insbesondere aus Leichtmetall, beispielsweise aus Aluminium oder einer Aluminiumlegierung, wird mit Vorteil gegenüber dem Stand der Technik erreicht, dass Verformungen bei Sonneneinstrahlung zumindest weitgehend vermieden werden.

Ein ganz wesentlicher Vorteil von Rankstöcken aus Metall, insbesondere aus einem Leichtmetall, vorzugsweise aus Aluminium oder einer Aluminiumlegierung ist ein optimaler Wärmefluss vom Pflanzrohrstock in das Erdreich gegeben, was enorme Vorteile für das Pflanzwachstum mit sich bringt. Ein derartiger Wärmefluss ist bereits dann gegeben, wenn die Rankvorrichtung eine unbehandelte Metalloberfläche vorzugsweise aus Aluminium aufweist. Ganz besonders bevorzugt ist es die Rankvorrichtung, beispielsweise durch Lackieren oder Eloxieren, oder sonstige Methoden einzufärben, um die Wärmeabsorption zu verbessern und damit einen noch größeren Wärmefluss vom Pflanzrohrstock in das Erdreich zu gewährleisten. Der Wärmeübertrag auch ins Erdreich und zum Wurzelwerk wird durch die große Oberfläche der Erdlanze optimiert. Auch erwünschte puffernde und Wärme ausgleichende Effekte sind mit dieser Anordnung zu erzielen.

Bevorzugt sind, wie zuvor bereits angedeutet, die Durchgangslöcher, deren Anzahl der Anzahl der Rankstöcke entspricht, etwas größer bemessen als der Querschnitt der Rankstöcke. Anders ausgedrückt ist die Querschnittsfläche der Durchgangslöcher bevorzugt etwas größer als die Querschnittsfläche der Rankstöcke, sodass Regenwasser ungehindert entlang der Rankstöcke nach unten strömen kann. Bevorzugt ist die Regenauffangwanne so ausgeformt, dass die Rankstöcke, vom Boden aus betrachtet, schräg durch die Durchgangslöcher gesteckt werden können - wobei auch eine Ausführungsform mit senkrechten Stöcken realisierbar ist.

In Weiterbildung der Erfindung ist mit Vorteil vorgesehen, dass die Schäfte der Rankstöcke an einer Längsseite eine Oberflächenstruktur aufweisen, beispielsweise eine Rillung mit sich vorzugsweise in Umfangsrichtung erstreckenden Rillen oder eine Rändelung. Bevorzugt ist die Rändelung bzw. Rillung im montierten Zustand nach außen orientiert, wodurch verhindert wird, dass auf dem Schaft auftreffender Regen vom Schaft wegspritzen kann. Aufgrund der mittels der Oberflächenstruktur vergrößerten Oberfläche wird sichergestellt, dass zumindest näherungsweise sämtlicher auf den Schaft auftreffender Regen auch außen an diesem entlang zum Erdreich strömen kann. Ganz besonders bevorzugt ist der Schaft auf der von der Riffelung bzw. Rändlung abgewandten Umfangs- bzw. Längsseite glatt ausgebildet, so dass das auf die Oberflächenstrukturseite auftreffende Wasser aufgrund der Schräge auf die glatte Seite und entlang der glatten Seite nach unten abfließen kann. Durch die Rillung bzw. Rändelung wird zudem eine rutschfeste Befestigungsmöglichkeit für Pflanzenhalter und/oder Regenauffangwannen in allen Höhenlagen bereitgestellt. Nachdem die schräggestellten Rankstöcke, beispielsweise mit Bohnen bewachsen sind, dienen die Blätter als zusätzliche Regenauffangflächen und leiten das Wasser kaskadenartigen auch bei nur leichtem Regen oder Tau sehr ergiebig zu den Wurzeln. In Trockenzeiten wird über die fakultativ vorgesehene Wasserleitung das Gießwasser entlang des, vorzugsweise einseitig geriffelten Rankstockes zu den Wurzeln geleitet.

Ganz besonders bevorzugt umfasst die Rank- und Bewässerungsvorrichtung für den Fall der Ausbildung als Pflanzturm einen in den Boden steckbaren Mittelstock, der bevorzugt, jedoch nicht zwingend zentrisch angeordnet ist. Dieser Mittelstock dient u. a. als Montagehilfe, da zunächst dieser mit bereits aufgesetzter Regenwanne in den Boden gesteckt werden kann. Die weiteren schrägen Rankstöcke können dann, bei Bedarf, nachher eingeführt werden, wobei auch eine alternative Montagereihenfolge realisierbar ist. Der Mittelstock ist im Falle einer zylindrischen Ausformung auch als zentrale Wasserleitung einsetzbar, wobei über einen Schlauchanschluss Wasser im Mittelstock zentral nach oben in die Auffangwanne geleitet werden kann und sich von dort aus den einzelnen Rankstöcken entlang zum Wurzelwerk geführt wird.

Ganz besonders bevorzugt sind die Rankstöcke derart ausgebildet, insbesondere mit seitlichen Aussparungen und/oder Blechschrauben versehen, dass sie den Pflanzen einen verbesserten Halt bieten und/oder ermöglichen auf einfache Weise, insbesondere schlaufenartig ausgebildete, Rankhilfen bzw. Pflanzenhalter einhängen zu können, um den, insbesondere fruchtbeladenen, Pflanzen ausreichenden Halt zu geben.

Ganz besonders bevorzugt sind die Pflanzenhalter derart anzuordnen, dass diese aus den Halterungen nach oben herausgleiten und so mit den Pflanzen mitwachsen können, jedoch bei entsprechender Gewichtsbelastung wieder in die Aussparungen etc. zurückgleiten können, um die Pflanzen gegen die Schwerkraft stützen zu können.

Ganz besonders bevorzugt ist eine Ausführungsform der Rank- und Bewässerungsvorrichtung - wie zuvor bereits angedeutet - als einfaches Gewächshaus. Hierzu ist in Weiterbildung der Erfindung ein Umhang aus, vorzugsweise transparentem, Kunststoff, insbesondere aus PE, vorgesehen, womit der Pflanzturm oder die Reihenanordnung umhüllt werden kann. Bevorzugt sind im Bereich eines oberen Saums randseitig verstärkte Durchgangslöcher vorgesehen, um den Pflanzturmumhang über die Pflanzstöcke (Rankstöcke) einhängen zu können. Am unteren Saum sind bevorzugt ebenfalls verstärkte Löcher vorgesehen, um den Pflanzturmumhang mit Heringen oder Erdlanzen am Boden festlegen zu können. Bevorzugt wird der Pflanzturmumhang derart befestigt, dass dieser die Rankstöcke in einem Bereich unterhalb der oberen Einhänglöcher nicht berührt. Bei der Ausbildung der Rank- und Bewässerungsvorrichtung als einfaches Gewächshaus können die Rankstöcke auch vertikal ausgerichtet werden, wobei die Stabilität bevorzugt über mindestens eine Sturmspange gegeben ist. Bevorzugt überragt die Regenwasserauffangwanne die Rankstöcke soweit nach außen, dass eine Berührung der Rankstöcke durch den Pflanzturmumhang in einem Bereich zwischen der Regenauffangwanne und dem Boden vermieden wird.

Besonders bevorzugt sind mehrere, insbesondere bei einem Pflanzturm 3 und bei einer Reihenanordnung 2 Rankstöcke über eine Sturmspange aneinander fixiert, wobei die Sturmspange bevorzugt derart ausgebildet ist, dass sie die Rankstöcke klemmend aufnimmt. Durch das Vorsehen mindestens einer derartigen Sturmspange wird die Stabilität der Rank- und Bewässerungsvorrichtung wesentlich erhöht. Auch wird es durch das Vorsehen einer Sturmspange möglich die Rankstöcke bis zu 1 Meter länger auszubilden, als ohne Sturmspange. Bevorzugt besteht eine Sturmspange aus zwei Metallteilen, wobei in mindestens einem Metallteil für jeden Rankstock eine Einbuchtung vorgesehen ist, die zur, insbesondere formkongruenten Aufnahme der Sturmspange dient. Falls die Längsmittelachse dieser Sturmspange geneigt ist, ist die exakte Montagehöhe der Sturmspange automatisch vorgegeben.

Die Rank- und Bewässerungsvorrichtung kann nicht nur als Pflanzturm realisiert werden, sondern auch als Pflanzreihe, was insbesondere beim semiprofessionellen oder professionellen Einsatz Vorteile mit sich bringt. Ganz bevorzugt sind die dann nebeneinander, d.h. in Reihe, vorzugsweise in Längsrichtung hintereinander anzuordnenden Regenauffangwannen rechteckig konturiert und dienen, wie beim Pflanzturm, zum Halten bzw. Positionieren der Rankstöcke. Bevorzugt sind auch bei einem derartigen Ausführungsbeispiel die vorzugsweise vorgesehenen Erdlanzen mit seitlich nach außen stehenden Nasen versehen, um das Eindrücken bzw. Einklopfen der Rankstöcke in das Erdreich zu erleichtern. Eine Gießwasserleitung kann wahlweise über die Auffangwannen geführt werden und bei Trockenheit die Pflanzen adhäsiv am Rankstock oder über entsprechende Auslässe im Fußbereich gleichmäßig und effizient mit Wasser versorgen.

In Weiterbildung der Erfindung ist ein einfaches Gewächshaus beschrieben, umfassend einer Anzahl von Universal- Rankstöcken und Auffangwannen, von denen zumindest zwei formschlüssig verbunden sind und ein statisch belastbares Element bilden, wobei die Universal- Rankstöcke als statische Stützen dienen und die damit gestützten, miteinander verbundenen Auffangwannen ein Dach bilden. Das von den Auffangwannen gebildete Dach ist dergestalt aufgebaut, dass Regen- oder dorthin geleitetes Gießwasser zu den Rankstöcken geführt wird und adhäsiv an oder in den bevorzugt schräg gestellten Rankstöcken zum Wurzelwerk geleitet wird. Besonders bevorzugt ist das entstehende Dach annähernd als Flachdach ausgebildet, weil sich bildende Tautropfen, nicht wie bei herkömmlichen Gewächshäusern, abfließen, sondern durch Kondensations-und Verdunstungseffekte zu einem den Pflanzungen zuträglichen Klima beitragen bei gleichzeitiger Wasserersparnis.

Hinsichtlich des Systems wird die Aufgabe mit einem Bausatz für ein Gewächshaus gelöst, welcher eine Vielzahl von Rankstöcken und Auffangwannen umfasst, die in ihrer Gesamtheit das Grundgerüst für ein stabiles Gewächshaus bilden, welches durch feste, bevorzugt durch transparente Kunststoffplatten oder folienartige Wand- und Türelemente flexibel und einfach zu einem vollwertigen Gewächshaus nahezu beliebiger Länge und Breite ergänzt werden kann.

Es liegt der Gedanke zugrunde, ein modular aufgebautes und beliebig erweiterbares, robustes, kostengünstiges und über natürliche Konvektions- und Verdunstungseffekte vorteilhaft klimatisiertes Gewächshaus dadurch zu schaffen, dass von einer Vielzahl von Universal- Rankstöcken, bevorzugt aus korrosionsgeschütztem Metall, besonders bevorzugt aus Aluminiumrohren, vorzugsweise mit für den Zweck der statischen Belastbarkeit und leichten Einbringbarkeit speziell geformter Erdlanze versehen, dergestalt mit einer Vielzahl von Auffangwannen, bevorzugt aus wetterbeständigen und hagelsicheren, lichtdurchlässigen oder transparenten Kunststoffen bevorzugt aus Polycarbonat oder PE hergestellt, zu verbinden, dass eine kompaktes und statisch tragfähiges Grundmodul entsteht, welches beliebig erweiterbar ist und dessen Wände und Öffnungen ebenfalls modular und einfach ergänzend angebracht werden können. Dabei ist das Gewächshaus für den privaten Gebrauch im Hobbygarten als auch für den professionellen landwirtschaftlichen Einsatz, beispielsweise zum Heranziehen von Gemüse, insbesondere Tomaten, Gurken, Tafeltrauben und anderen Rankgewächsen, geeignet. Ein weiterer Vorteil ist, dass der Untergrund nicht zwingend eben sein muss, sondern auch schräg oder hügelig sein kann, da die Befestigung der Auffangwannen an den Rankstöcken variabel ist. Ferner vorteilhaft ist es, dass das Gewächshaus leicht wieder abgebaut und an neuer Stelle wieder aufgebaut werden kann.

Insbesondere bevorzugt ist eine Schrägstellung der Rankstöcke, wodurch im Verbund sowohl statische Vorteile als auch Vorteile bezüglich der Ausbreitungsmöglichkeit der Pflanzen, der optimalen Lichtausnutzung, der Begehbarkeit und der Bewirtschaftung auf engstem Raum ergeben, was den Ertrag steigert bei geringerem Platzbedarf und Arbeitsaufwand.

Besonders bevorzugt ist eine Ausführungsvariante, bei der mindestens zwei Pflanzreihen, d.h. Regenauffangwannenreihen parallel nebeneinander angeordnet sind, wobei die beiden Pflanzreihen direkt durch miteinander verschränkte Regenauffangwannen miteinander verbunden werden, vorzugsweise derart, dass ein vergleichsweise großes Gewächshaus ohne freien Zwischenraum zwischen benachbarten Parallelreihen entsteht. Auf diese Weise ist es möglich, beliebig große Gewächshäuser durch miteinander Verbinden von jeweils parallel zueinander angeordneten Regenauffangwannenreihen herzustellen. Ganz besonders bevorzugt ist es, wenn die jeweils in Richtung der Längserstreckung der Pflanzreihen hintereinander angeordneten Dachsegmente, also jeweils zwei, drei oder vier benachbarte Regenauffangwannen über eine Falzverbindung, insbesondere einen einfachen Falz, miteinander verbunden, insbesondere ineinander gesteckt, sind, wobei sich der Falz bzw. die Falze bevorzugt derart zur Längserstreckung der Pflanzreihen erstrecken, dass mit nur einer einzigen Ausführungsform der Regenauffangwannen die gesamte Dachkonstruktion eines Gewächshauses erzeugen lässt.

Dabei sind die einzelnen Regenauffangwannen bevorzugt an gegensätzlich geneigten Rankstöcken derart fixierbar gestaltet, dass ein den Bedürfnissen der Pflanzen, der Lichtausnutzung und der Ergonometrie angepasstes Raster, entsteht, wobei sich Stock- bzw. Lochabstände von jeweils ca. 60 cm bestens eignen. Bevorzugt überlappen sich die Regenauffangwannen direkt, so dass das auftreffende Wasser komplett in die Abläufe der Regenauffangwannen strömen kann. Bei Bedarf - jedoch nicht zwingend - können die benachbarten Segmente mittels die Überlappung durchsetzenden, vorzugsweise gekonterten, Sicherungselementen aneinander fixiert werden. Die Ecken der Dachsegmente sind vorteilhaft leicht gerundet ausgebildet, damit an den Kreuzungspunkten ein Sicherungselement eingesetzt werden kann, welches den Verband der Regenauffangwannen gegeneinander fixiert und die statische Belastbarkeit der Dachkonstruktion zusätzlich verbessert. Das Sicherungselement besteht bevorzugt aus einem von unten bedienbaren Schraubelement, welches die Ecken der Regenauffangwannen klemmend aufnehmende, entsprechend geformte Unterlegscheiben aufweist, welche bis zu vier Regenauffangwannen in kompakter Weise wetterfest zusammen verspannt.

Ganz besonders bevorzugt ist es, wenn, insbesondere bei einer reihenartigen Anordnung mehrerer Regenauffangwanne, durch oder über die Regenauffangwannen eine Gießwasserleitung verläuft, welche mit Löchern und/oder Düsen versehen ist, durch die Wasser in die Regenwasserauffangwannen austreten und über diese zu den Rankstöcken ins Erdreich strömen kann. Die Falzverbindung der Regenauffangwannen ist derart ausgebildet, dass eine aufsteckbare Rohrschelle einrasten und eine Gießwasserleitung in statisch ausreichendem Mass tragen kann. Die Ausbildung der Rohrschellen erlauben auch nachträgliche Verdrehung und Verschiebung der Gießwasserleitung in horizontaler Richtung, damit die Wasserauslassöffnungen entsprechend justiert werden können. Bei Bedarf kann auch eine Gießwasserleitung bei nur einer einzigen Regenauffangwanne realisiert werden - also auch bei einer Ausführungsform der Rank-und Bewässerungsvorrichtung als Rankturm, um in Trockenzeiten Gießwasser zentral einzuspeisen und über die, im Falle des Gewächshausdaches als Dachsegmente ausgebildeten Regenauffangwannen und die Rankstöcke gleichmäßig zu den Pflanzen zu führen.

Besonders bevorzugt ist es, die mindestens eine Regenauffangwanne segmentiert auszubilden, also derart, dass diese mindestens zwei voneinander separate Wasserauffangsegmente aufweist, um somit das auf die Regenauffangwanne auftreffende Wasser komplett und gleichmäßig an einzelne Rankstöcke oder an Gruppen von Rankstöcken verteilen zu können. Bevorzugt sind die einzelnen Segmente hin zu dem mindestens einen sie durchsetzenden Rankstock geneigt, damit die einzelnen Segmente sicher leer laufen können und somit sämtliches Wasser zu den Rankstöcken und entlang dieser zum Wurzelwerk strömen kann. Vorteil von Metall-Rankstöcken ist, dass im Gegensatz zu Holzstöcken die gesamte Wassermenge am Boden ankommt.

Im Hinblick auf die konkrete Ausbildung der Segmentierung, insbesondere bei einer reihenartigen Anordnung von Regenauffangwannen gibt es unterschiedliche Möglichkeiten. Gemäß einer ersten möglichen Ausführungsform ist vorgesehen, dass die in Längsrichtung hintereinander angeordneten Segmente abwechselnd in zwei einander entgegengesetzte Seitenrichtungen geneigt angeordnet sind. Ebenso ist eine Ausführungsform realisierbar, bei der die Segmentierung derart ausgebildet ist, dass auf die Regenwanne auftreffendes Wasser (Regenwasser) und/oder durch eine Wasserleitung zugeführtes Wasser seitlich in zwei Richtungen zu jeweils mindestens einem Rankstock abströmen kann.

Neben der Möglichkeit der Ableitung des Regen- oder Gießwassers am Rankstock entlang zum Wurzelwerk, wobei das Regen- und Gießwasser durch die systematisch Wasser zum Ablaufloch führende Konstruktion der Auffangwanne gekennzeichnet ist, und das Ablaufloch ist etwas größer als der durchragende Stock ausgeformt ist, so dass das Wasser an den Rankstöcken entlang zum Wurzelwerk fließen kann, ist in Variation hierzu die Leitung des Gießwassers durch den Rankstock hindurch und durch Auslassöffnungen am Fuß des Rankstockes, mit den Merkmalen der zweiten Alternativlösung des Anspruchs 1, zu realisieren. Hierzu wird die Auffangwanne mit einer entsprechend der sich durch Schrägstellung der Rankstöcke ergebenden Winkel (größer 15°) konisch ausgeführten Ablauftülle ausgestattet, welche die bevorzugt schräge Anordnung der Rankstöcke ermöglicht. Die konische Ablauftülle kann integraler Bestandteil der bevorzugt aus Kunststoff hergestellten Auffangwanne sein, in Variation auch eingeklebt oder klemmend verschraubt ausgebildet sein. Eine leicht zu montierende Befestigung der Regenauffangwanne wird mittels einer Haltespange und einer Klemmschelle bevorzug dergestalt ausgebildet, dass die Montage komplett von unten bzw. innen im Gewächshaus stattfinden kann. Bei der Verwendung U-förmiger Rankstöcke sind die Ablauflöcher entsprechend U-förmig ausgebildet. Dasselbe Prinzip gilt für andere Formen.

Die Durchgangslöcher beziehungsweise die konisch ausgebildeten Trichterstutzen sind sowohl bei der einzelnen Regenauffangwanne als auch bei einer zum Dachverbund ausgestalteten Kombination der Regenauffangwannen im Falle eines Gewächshausdaches dergestalt platziert, dass die Rankstöcke, welche die Regenauffangwannen halten, die zum Pflanzenwachstum, zur Raumausnutzung und zur Ernte vorteilhaften Abstände ermöglichen bzw. eine vorteilhafte Anordnung vorgeben.

Als Gewächshaus ausgebildet ergeben sich durch die in Näherung als Flachdach ausgebildete und durch die Rankstöcke als Wärme leitenden Elemente besondere für das Pflanzenwachstum und die Pflanzengesundheit förderliche klimatische Bedingungen. Die Temperaturübergänge gestalten sich weicher und harmonischer, was den durch abrupte Temperaturänderungen entstehenden Stress der Pflanzen erheblich reduziert. Sich auf der Innenseite des horizontal ausgerichteten Gewächshausdaches bildender Tau rinnt nicht ab, sondern schlägt sich in einer großen Vielzahl von stationären Tautröpfchen an. Dieser meist in die Nacht hinein auftretende Kondensationseffekt gibt Kondensationswärme ins Gewächshaus ab genau dann, wenn es kühl wird. Umgekehrt wird Verdunstungskälte in das Gewächshaus abgegeben, wenn sich die Umgebung erwärmt. Dies führt zusammen mit den Wärme leitenden Eigenschaften der metallischen Rankstöcke zu den erwünschten Puffereffekten und einem erheblich gleichmäßigeren Klima im Gewächshaus. Ferner reduziert sich der Wasserverbrauch, da das verdunstende Wasser im innern des Gewächshauses dem Gesamthaushalt wieder zugute kommt und die Pflanzen dadurch weniger Wasser ausdünsten.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine als Pflanzturm ausgebildete Rank- und Bewässerungsvor- richtung in einer Seitenansicht (als Schnitt?)
- Fig. 2:: eine als Pflanzturm ausgebildete Rank- und Bewässerungsvor- richtung in einer Draufsicht,
- Fig. 3a und Fig. 3b:: unterschiedliche Ansichten einer Regenauffangschale für einen Pflanzturm,
- Fig. 4a bis Fig. 4d:: unterschiedliche Ansichten von Sturmspangen für einen Pflanz- turm oder eine Pflanzreihe,
- Fig. 5a bis Fig. 5d:: unterschiedliche Ansichten und Details einer als Reihenanord- nung ausgebildeten Rank- und Bewässerungsvorrichtung mit Wasserleitung;
- Fig. 6a bis Fig. 6e:: die Darstellung eines Schaftendes mit darin verpresster, gerunde- ter Erdlanze bei zylindrischem und U-förmigem Rankstock
- Fig. 7a bis Fig. 7c:: Aufsicht, Ansicht und Schnitt von aneinander gelegten Regenauf- fangwannen mit und ohne Rankstock
- Fig. 8a:: Detail vom Anschluss des die Regenauffangwanne durchdringen- den Rankstockes
- Fig. 8b:: Detail vom Anschluss an die mit konischer Ablauftülle versehene Regenauffangwanne
- Fig. 8c bis Fig. 8d:: Detail vom Anschluss der Regenauffangwanne mit durchdringen- dem U-förmigen Rankstock
- Fig. 9a bis Fig.9c:: Ansichten und Schnitte einer möglichen Ausführungsform eines Abschnittes eines Gewächshauses mit einem von mehreren Rank- stöcken und Auffangwannen gebildeten Dach, mit bevorzugter Anordnung der Rankstöcke.
- Fig. 10a bis Fig. 10c:: Aufsichten und Schnitt der Aneinanderanlegung von Regenauf- fangwannen mit Sicherungselement,
- Fig. 11a bis Fig. 11b:: Detail Wandanschluss am Rankrohr mit festen Kunststoffplatten und Abstandshalter
- Fig. 12a bis Fig. 12c:: Wand- Bodenanschluss ohne und mit Belüftungsmöglichkeit
- Fig. 13a bis Fig. 13g:: unterschiedliche Ausführungsformen von Rankstöcken,
- Fig. 14:: bevorzugte Variante des Rankstockes
- Fig. 15a bis Fig. 15c:: verschiedene Details von möglichen Ausführungsvarianten von Rankstöcken,
- Fig. 16a bis Fig. 16c:: Detailansichten und Schnitt der steckbaren und am Falz ver- schiebbaren Rohrschelle (Steckschelle)

In den Figuren sind gleiche Elemente und Elemente mit der gleichen Funktion mit den gleichen Bezugszeichen versehen.

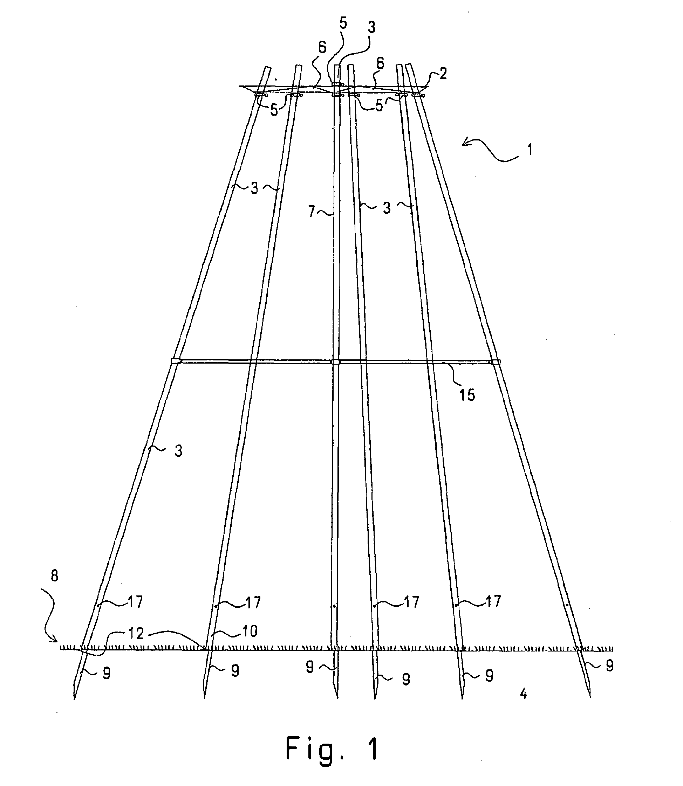

In Fig. 1 ist eine als Pflanzturm ausgebildete Rank- und Bewässerungsvorrichtung 1 (im Folgenden Vorrichtung 1) für Pflanzen gezeigt. Die Vorrichtung umfasst eine kreisrund konturierte Regenauffangwanne 2, die von einer Anzahl von als Pflanzrohrstöcken aus Aluminium ausgebildeten Rankstöcken 3 getragen wird. Hierzu sind in den Rankstöcken 3 mit Abstand zum Boden 4 Klemmschellen 5 (alternative Schrauben oder Nieten einsetzbar) vorgesehen, mit welchen die Regenauffangwanne 2 festgesetzt wird. Die Regenauffangwanne 2 weist eine Vielzahl von Durchgangslöchern 6 auf, die derart ausgebildet sind, dass die Rankstöcke 3, bis auf einen Mittelstock 7 schräg ausgerichtet sind. Die Rankstöcke 3 durchsetzen die Durchgangslöcher 6 und überragen die Regenauffangwanne 2 nach oben. Die Regenauffangwanne 2 ist in dem gezeigten Ausführungsbeispiel aus transparentem Kunststoff ausgebildet. Insgesamt vermittelt die Rank- und Bewässerungsvorrichtung 1 die Struktur eines Tipizeltgerüstes.

Das Ausrichten der Regenauffangwanne 2 kann beim Eindrücken der Rankstöcke 3, genauer des jeweiligen Verankerungsabschnittes 8, durchgeführt werden. In dem gezeigten Ausführungsbeispiel ist jeder Verankerungsabschnitt 8 als schwertartige Erdlanze 9 ausgebildet, die von einem schwertartigen, flachen und scharfen sowie spitz zulaufenden Leichtmetallteil gebildet ist. Die Erdlanzen 9 sind mit dem zugehörigen rohrförmigen Schaftabschnitt 10 durch Verpressen verbunden.
Wie sich aus Fig. 1 ergibt, ist jede Erdlanze 9 mit einem Eindrückkragen 12 ausgestattet, die ein erleichtertes Eindrücken und/oder Einschlagen ins Erdreich ermöglichen.

Wie sich aus Fig. 1 ergibt, durchsetzt ein Mittelstock 7 eine zentrische Durchgangsöffnung 3 innerhalb der Regenauffangwanne 2. Der Mittelstock 7 ist der einzige vertikal stehende Stock. Zur Ausrichtung und Festsetzung der Regenauffangwanne 2 wird eine Klemmschelle 5 auch oberhalb der Regenauffangwanne 2 gesetzt.

Bei einer alternativen Ausführungsform können auch sämtliche Rankstöcke 3 weniger winkelig bis nahezu vertikal ausgerichtet werden, nämlich insbesondere dann, wenn ein nicht gezeigter Folienumhang vorgesehen wird, der im Bereich der oberen freien Enden in die Rankstöcke 3 eingehängt und im Boden mittels Heringen mit Abstand zu den Rankstöcken 3 verankert werden kann. Bevorzugt sind die Durchgangslöcher 6 für den Fall des Vorsehens eines Folienumhangs weiter, d.h. mit größerem Radialabstand vom Umfangsrand der Regenauffangwanne 2 entfernt als in dem gezeigten Ausführungsbeispiel, um ein Aufliegen des Folienumhangs auf den Pflanzen und/oder den Rankstöcken 3 sicher zu vermeiden.

Der auf die Regenauffangwanne 2 auftreffende Regen kann durch die Durchgangslöcher 6 hindurch außen an den Rankstöcken 3 entlang zum Wurzelwerk der Pflanzen strömen. Auch strömt der auf die Rankstöcke 3 auftreffende Regen außen an diesen entlang zum Wurzelwerk der Pflanzen. Zu erkennen ist, dass hierfür die Rankstöcke 3 den Außenumfang der Regenauffangwanne 2 seitlich überragen.

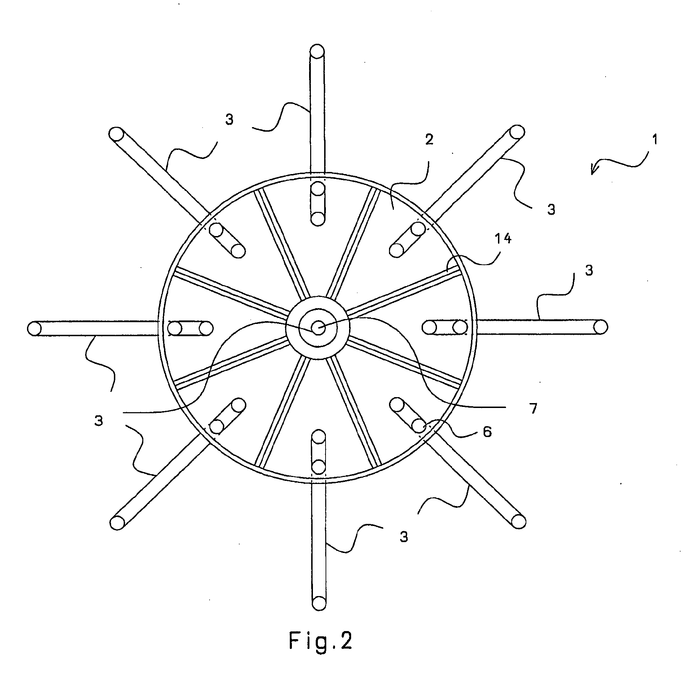

Fig. 2 zeigt die als Pflanzturm ausgebildete Vorrichtung 1 in einer Ansicht von oben. Zu erkennen ist der als Rankstock 3 ausgebildete Mittelstock 7. Um diesen herum sind mit Radialabstand die weiteren, gleichmäßig schräg angeordneten Rankstöcke 3 platziert und mit ihren Erdlanzen im Boden 4 verankert.

Aus Fig. 2 ergibt sich eine bevorzugte Möglichkeit zur Segmentierung der Regenauffangwanne 2. Zu erkennen sind eine Vielzahl von gleich großen kreissegmentförmigen (tortenstückförmigen) Segmenten 13, wobei jedem Segment 13 ein einziger Rankstock 3 zugeordnet ist. Die Segmente 13 sind derart ausgeformt, vorzugsweise mit Schrägen versehen, dass das auf sie auftreffende Wasser zu dem jeweiligen Durchgangsloch 6 des Segmentes 13 strömen und von dort aus entlang des Rankstockes 3 nach unten weiterfließen kann.

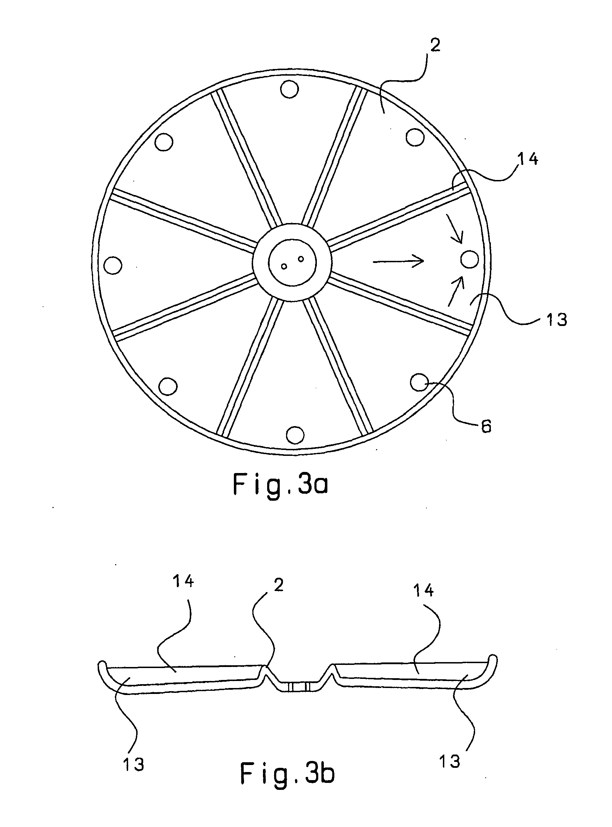

Fig. 3a zeigt eine mögliche Ausführungsform einer Regenauffangwanne 2 für einen Pflanzturm mit voneinander separaten Segmenten 13, wobei in jedem Segment 13 ein einziges Durchgangsloch 6 zur schrägen Aufnahme eines Rankstockes (nicht dargestellt) zugeordnet ist. Die einzelnen Segmente 13 sind über Erhöhungen (Wulste) 14 voneinander separiert.

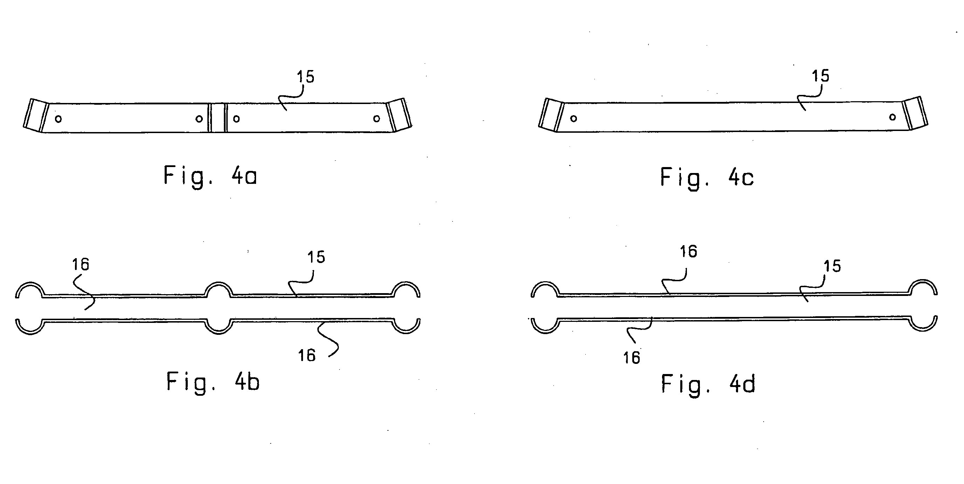

Fig. 3b zeigt eine Schnittansicht der Regenauffangwanne 2 gemäß Fig. 4a. Zu erkennen sind die Wulste 14 zur Separierung zweier in Umfangsrichtung benachbarter Segmente 13.

Fig. 4a und 4b zeigen eine Sturmspange 15 für einen Pflanzturm. Diese besteht aus zwei Metallteilen 16, die miteinander verschraubbar sind, derart, dass die Sturmspange 15 drei Rankstöcke fest miteinander verbindet, nämlich zwei äußere diametral angeordnete Rankstöcke 3 und den Mittelstock 7.
Fig. 4c und 4d zeigen eine Sturmspange 15 zum festen miteinander Verbinden von zwei Rankstöcken. Die Sturmspange 15 gemäß den Fig. 4a und 4b eignet sich bevorzugt zur Realisierung von Pflanzreihen.

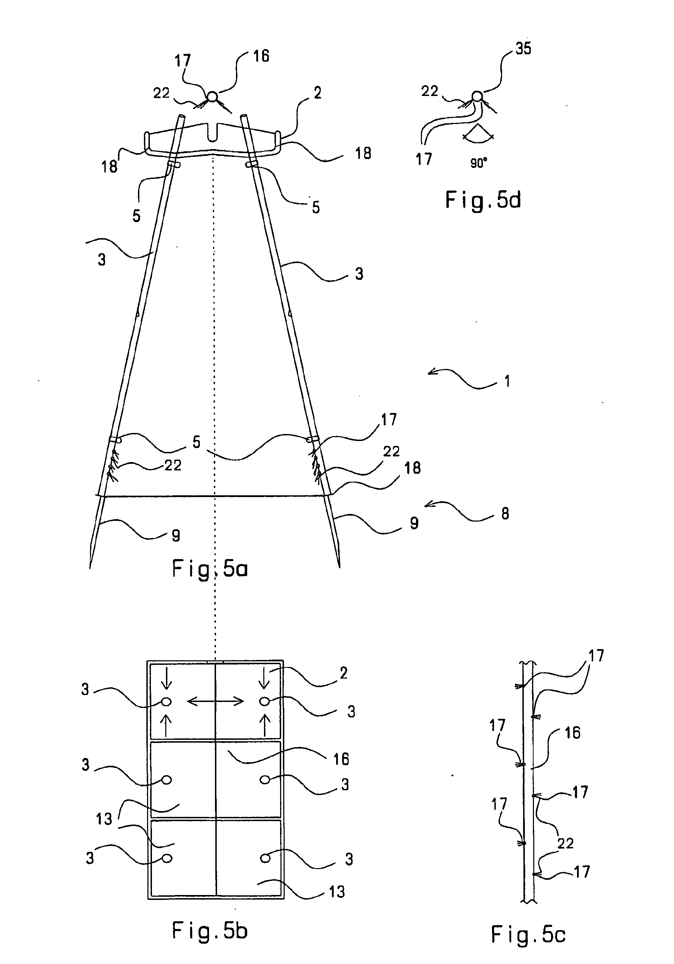

Fig. 5a bis 5d zeigen unterschiedliche Ansichten und Details einer bevorzugten Ausführungsform einer als Reihenanordnung ausgebildeten Rank- und Bewässerungsvorrichtung 1. In Fig. 5a ist in einer Frontansicht eine von mehreren Rankstöcken 3 aus Aluminium getragene Regenauffangwanne 2 gezeigt, die von einer durch diese verlaufende, aus Übersichtlichkeitsgründen oberhalb der Regenauffangwanne 2 eingezeichnete Wasserleitung 16 mit Gießwasser versorgt werden kann. Wie sich aus Fig. 5d ergibt ist die Wasserleitung 16 hierzu mit Austrittsöffnungen 17 versehen, die über einen Umfangswinkel von etwa 90° voneinander beabstandet sind. Aus Fig. 5a sind weiterhin Klemmschellen 5 an den Rankstöcken zu erkennen, die eine erleichterte Montage, d.h. ein erleichtertes waagerechtes Ausrichten der Regenwanne 2 ermöglichen.

Ferner zu erkennen sind seitliche Wasseraustrittsöffnungen 18 für den Fall, dass Regen- oder Gießwasser im Rankstock 3 zum Wurzelwerk geführt wird

Zu erkennen ist, dass die Rankstöcke durch abgeschrägte Bodenabschnitte 18 der Regenauffangwanne geführt sind. Zu erkennen ist ferner, dass der Boden der Regenauffangwanne 2 in einem mittleren Abschnitt dachartig erhöht ist, so dass auf zwei in Bezug auf die Breitenerstreckung nebeneinander angeordnete Segmente 13 gebildet werden, die gleichmäßig mit Gießwasser bzw. Regenwasser versorgt werden. Durch jedes Segment 13 ist ein Rankstock 3 geführt, dessen Durchmesser bevorzugt in etwa 25 mm beträgt.

Wie sich aus Fig. 5b ergibt, sind also, wie im Zusammenhang mit Fig. 5a erläutert jeweils zwei Segmente 13 nebeneinander und eine Vielzahl von Segmenten 13 hintereinander angeordnet. Zu erkennen ist ferner, dass sich die Rankstöcke 3 jeweils auf der gleichen Höhe, auch bezogen auf die Längserstreckung befinden, also aneinander gegenüberliegen, wodurch mehrere Rankstöcke pro Flächeneinheit vorgesehen werden können als bei einer bezogen auf die Längserstreckung der Regenauffangwanne 2 abwechselnden Anordnung. Pfeile in Fig. 5b symbolisieren, dass in diesem Segment 13 mehrere Winkel zueinander angeordnete Abschrägungen vorgesehen sind, die garantieren, dass das gesamte Wasser in Richtung auf den jeweiligen Rankstock 3 zuströmen kann.

Fig. 5c zeigt eine Wasserleitung 16 in einer Draufsicht mit den in Richtung der Längserstreckung abwechselnd in unterschiedliche Richtung orientiert angeordneten Austrittsöffnungen 17, aus denen Giesswasser 22 strömen kann. Anstelle der Austrittsöffnungen 17 können auch Düsen vorgesehen werden.

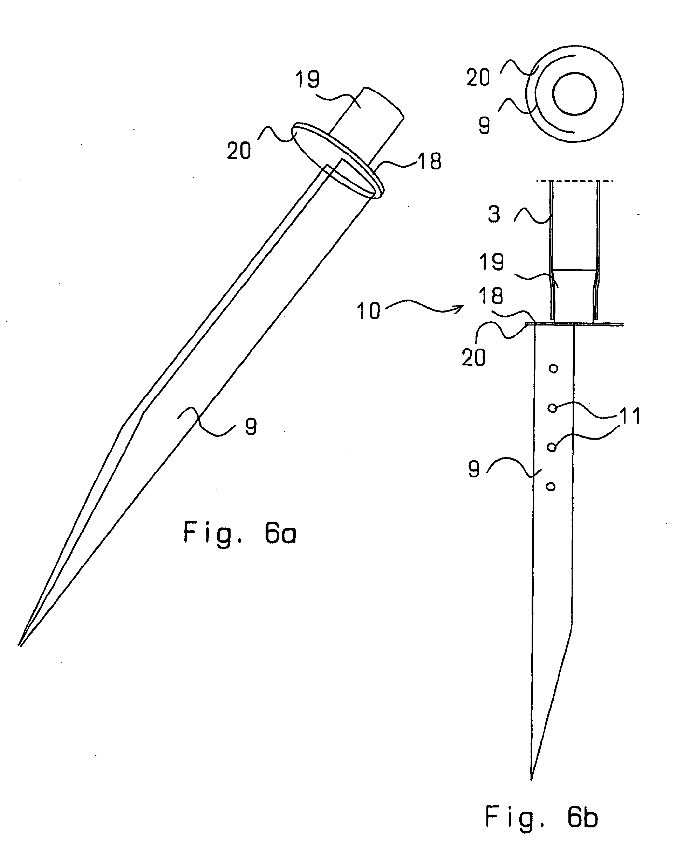

In Fig. 6a und Fig. 6b ist eine bevorzugte Ausführungsvariante einer Erdlanze 9 dargestellt. Bei der Erdlanze 9 gemäß Fig. 6a und 6b handelt es sich um ein Stanzbiegeteil aus verzinktem Stahlblech. Die Erdlanze 9 zeichnet sich durch eine im Querschnitt zumindest näherungsweise sichelförmige Ausformung aus, wobei die Erdlanze 9 trotz der gebogenen Form axial spitz zuläuft, ähnlich wie bei einem Zylinderschnitt. Die wie dargestellt ausgebildete, gekrümmte Schaufel der Erdlanze ermöglicht ein einfaches Einbringen in das Erdreich, insbesondere durch Axialkraftbeaufschlagen und gleichzeitiges abwechselndes Verdrehen in beide Umfangsrichtungen, da hierdurch etwaigen Steinen beim Eindrückvorgang ausgewichen werden kann. Die Erdlanze 9 hat aufgrund ihrer gebogenen Ausformung eine erhöhte Stabilität und ermöglicht die Ausbildung aus dünnem Blech, von vorzugsweise einer Dickenerstreckung von weniger als 1,5 mm.

Die Erdlanze 9 zeichnet sich weiter durch eine ringförmige Eindrückschulter 18 aus, die zur Axialkraftaufnahme, beispielsweise durch Beaufschlagung mit dem Fuß dient. Die Eindrückschulter (Tretschulter) überragt den die Erdlanze 9 klemmend haltenden Schaftabschnitt 10 in radialer Richtung. In den Schaftabschnitt 10 ist ein im Wesentlichen zylindrischer Fixierabschnitt 19 des Stanzbiegeteils aus Metall eingesteckt, wobei der Fixierabschnitt 19 optional in Längsrichtung geschlitzt ausgebildet ist.

Auf der dem Erdreich zugewandten Seite bildet die Eindrückschulter 18 einen Axialanschlag 20, der das Eindringen mit einer definierten Tiefe in das Erdreich sicherstellt sowie statische Belastungen gleichmäßig ans Erdreich überträgt, was zu einer erhöhten Stabilität der Gesamtkonstruktionen führt.

In Fig. 6b ist die Schaufel der Erdlanze 9 kann mit Löchern 11 ausgestattet, welche den Wurzeln der Pflanzen ermöglicht, diese zu durchdringen und durch ein Verwachsen mit den Pflanzen dem Gesamtsystem zusätzliche Vorteile bei der Stabilität erbringt.

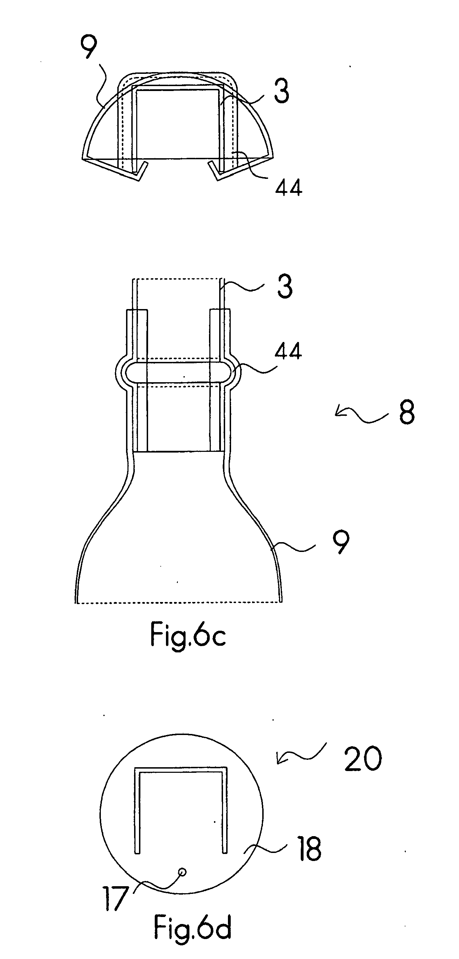

In Fig. 6c ist der Übergang eines U-förmig ausgestalteten Rankstockes 3 zum Erdnagel 9 des Verankerungsabschnittes 8 in Ansicht und Schnitt dargestellt, wobei die Verbindung über die Verpressung und Ausformung einer Sicke 44 dauerhaft belastbar gestaltet ist.

Fig. 6d zeigt in Weiterbildung eine Ausformung der Eindrückschulter bzw. des Axialanschlages als Einzelbauteil für den hier U-förmig dargestellten Rankstock, welche mit in den Verankerungsabschnitt 8 eingepresst werden kann, wobei durch Variation des Durchmessers ein Vorteil bezüglich der Anpassung des Systems an verschiedene Bodenbeschaffenheiten erzielt wird.

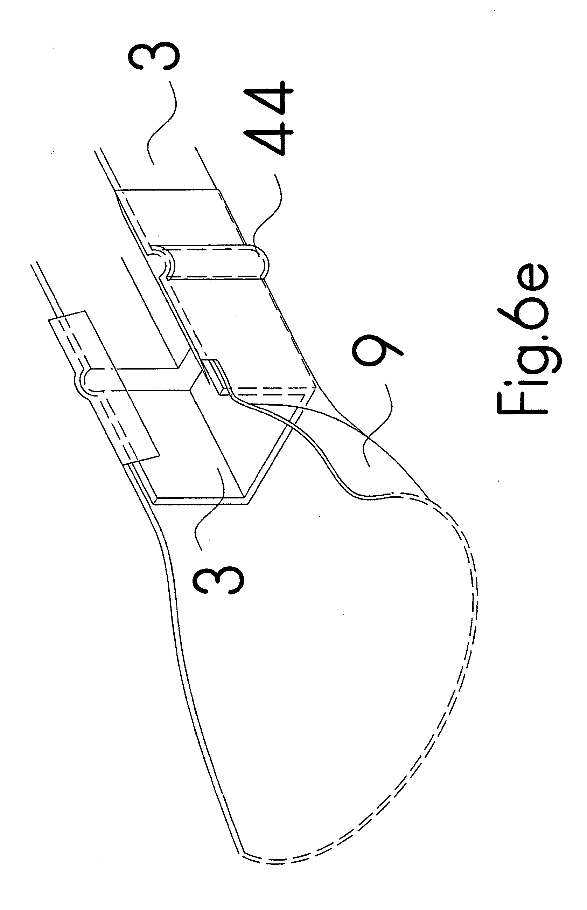

Fig. 6e zeigt perspektivisch Verbindungsdetails des Verankerungsabschnittes 8 bei U-förmigem Rankstock 3.

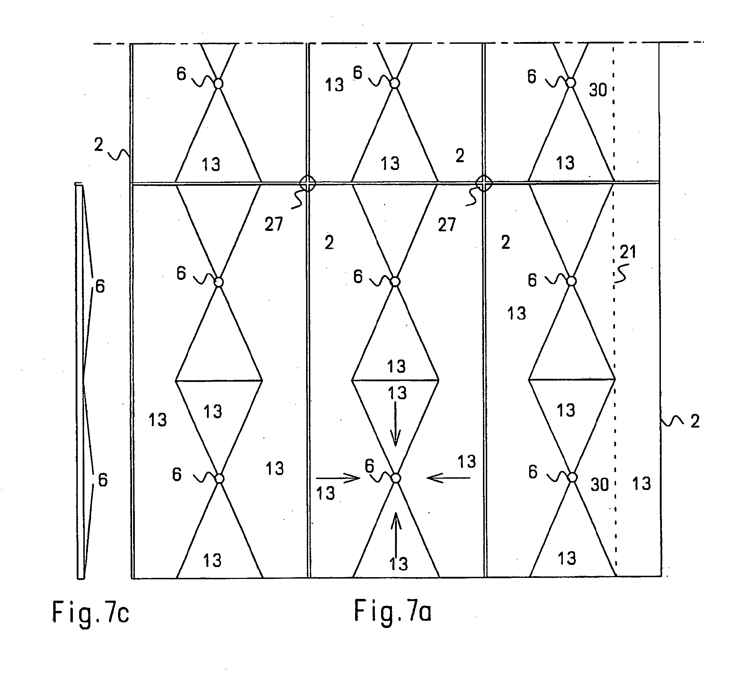

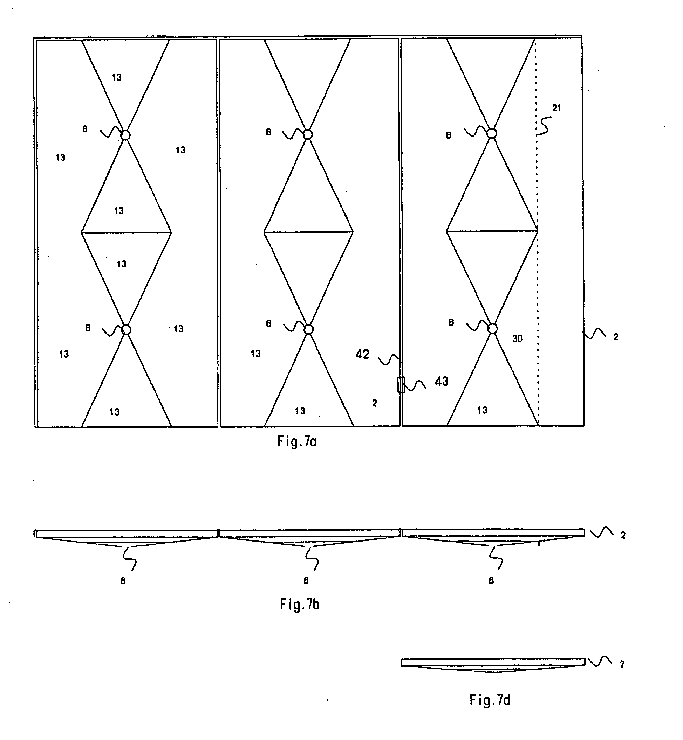

Fig. 7a bis 7c zeigen eine bevorzugte Ausführungsform von im Wesentlichen rechteckig konturierten Regenauffangwannen 2 zur Ausbildung von Pflanzreihen und großflächigen Gewächshausreihen. Zu erkennen sind voneinander separierte Segmente 13 mit jeweils einem Durchgangsloch 6. Die Segmente 13 sorgen für eine gleichmäßige Wasserverteilung auch bei nicht exakt waagrecht ausgerichteter Regenauffangwanne 2. Hierzu ist auch das jeweilige Durchgangsloch 6 abgeschrägt ausgeformt. Die Schrägen sind insbesondere aus den Schnitten 7b und 7c ersichtlich. Zu erkennen ist, dass die Schrägen abwechselnd in einander entgegengesetzte Seitenrichtungen geneigt sind. Die gestrichelt gekennzeichnete Linie 21 zeigt auf, an welcher Stelle eine noch zu beschreibende Gewächshauswand angesetzt wird, wobei die Linie 21 einer Geraden entspricht, was einen einfachen und genügend dichten Anschluss der Seitenwände ermöglicht.

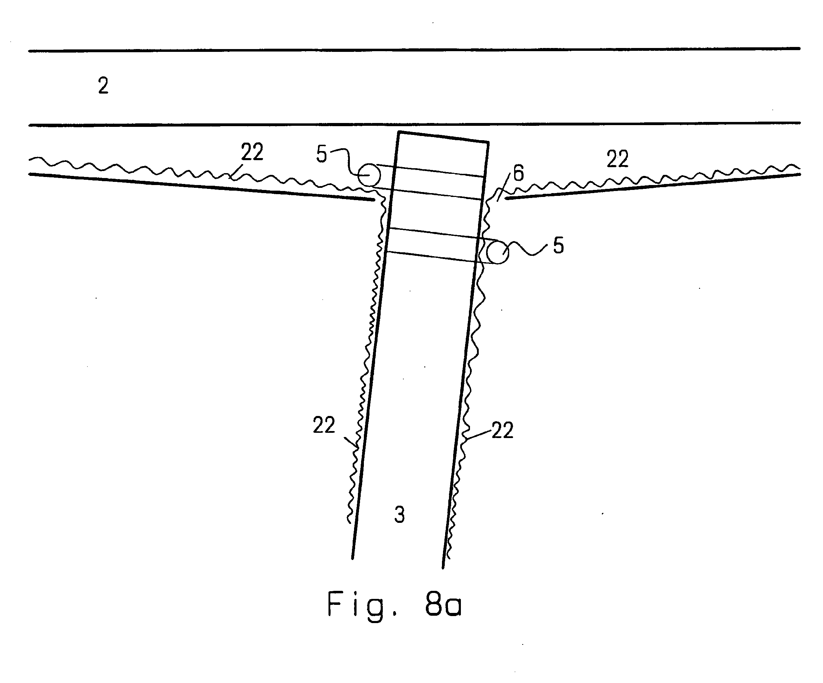

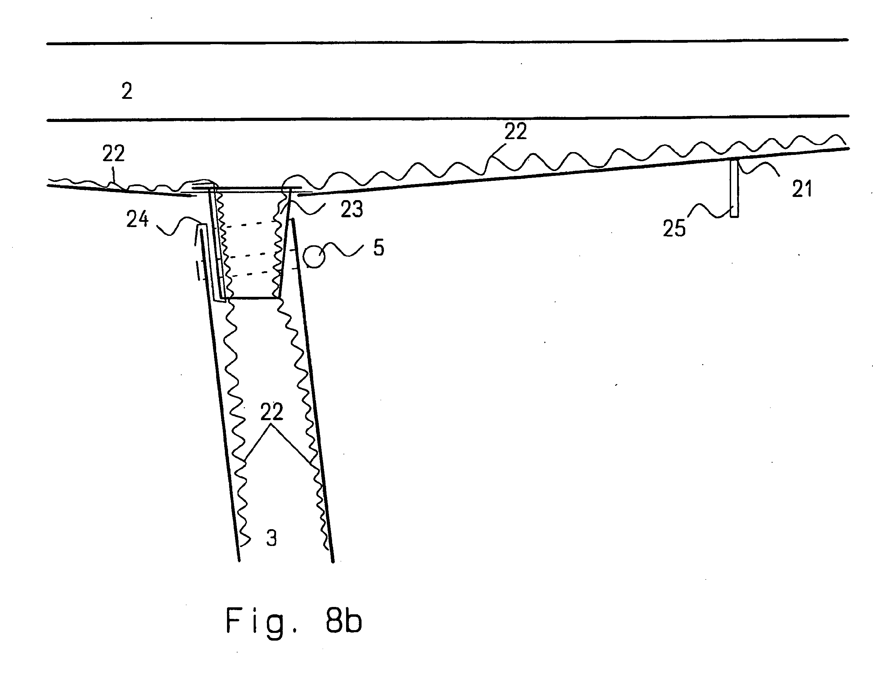

Fig. 8a und Fig. 8b zeigen die zwei Varianten der Wasserführung aus den Regenauffangwannen zum Wurzelwerk. In Fig. 8a wird das in die Regenauffangwanne 2 gelangte Wasser 22 adhäsiv am Rankstock 3 zum Wurzelwerk geführt, wobei das Durchgangsloch 6 etwas größer gehalten ist als der Rankstock 3 damit das Wasser 22 ablaufen kann. Zwei Klemmschellen 5, jeweils oberhalb und unterhalb des Durchgangsloches 6 angeordnet, fixieren die Regenauffangwanne 2. Das Wasser 22 kann auch durch eine (nicht dargestellte) Wasserleitung mit Wasser - Austrittsöffnungen in die Regenauffangwanne gelangen. In Fig. 8b wird das in die Regenauffangwanne gelangte Wasser durch die konisch geformte Ablauftülle 23 in den Rankstock 3 geleitet, wobei die konische Form die bevorzugte Schrägstellung der Rankstöcke 3 ermöglicht. Mittels der Haltespange 24 und einer Klemmschelle 5 kann die Regenauffangwanne 2 am Rankstock 3 fixiert werden, wobei die Montage einseitig von unten erfolgt. Die gedachte Linie 21 zeigt die spätere Lage der Anschlusslinie einer Seitenwand beim Ausbau zum Gewächshaus an, wobei der Befestigungssteg 25 optional fest mit der Regenauffangwanne 2 verbunden sein kann.

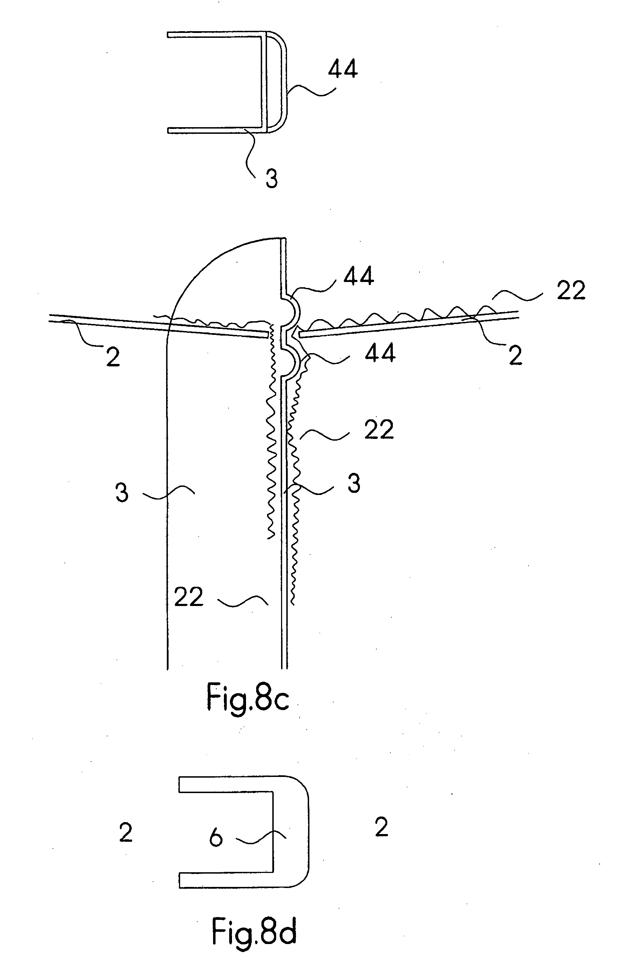

Fig. 8c zeigt eine in Seitenansicht und Schnitt dargestellte Variante der Wasserführung mit einem als U-Profil ausgestalteten Rankstock 3, wobei die Halterung der Regenauffangwanne 2 über ein Einklipsen zwischen die Sicken 44 erfolgt. Das in Fig. 8d entsprechend U-förmig dargestellte Durchgangsloch 6 ist dergestalt größer gehalten als der U-förmige Rankstock, damit das (nicht dargestellte) Wasser 22 ablaufen kann und die Halterung der Regenauffangwanne 2 zwischen den Sicken 44 ohne weitere Hilfsmittel gegeben ist.

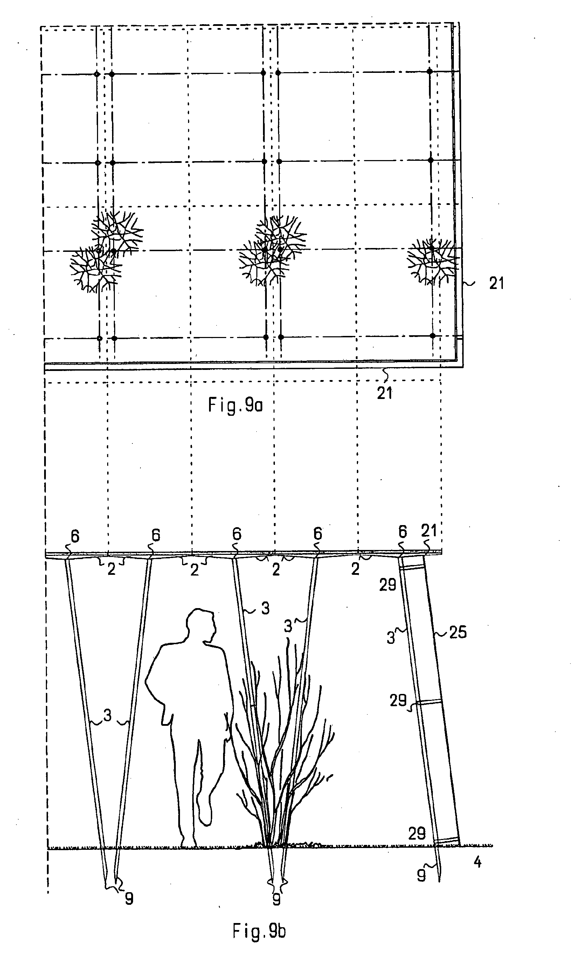

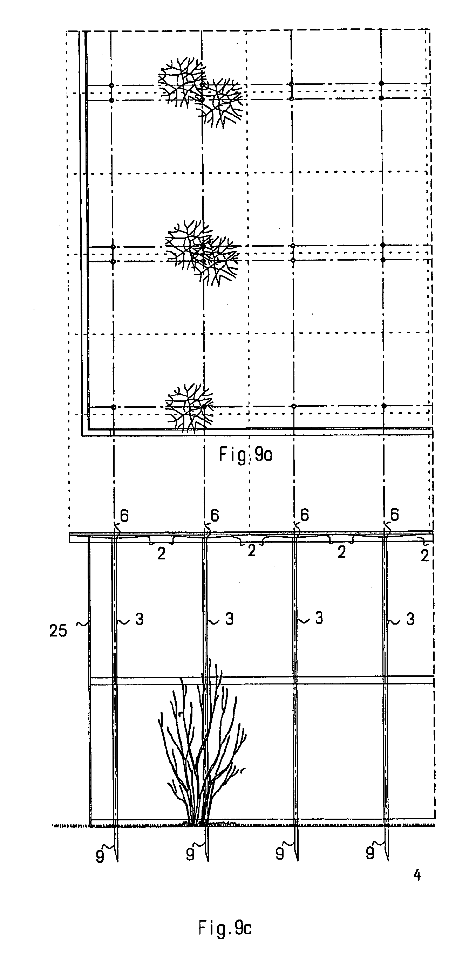

Fig. 9a und 9b und 9c zeigen jeweils Grundriss und Schnitt eines beliebig erweiterbaren Segmentes eines mittels des Systems erzeugbaren Gewächshauses 26. Die bevorzugte Schrägstellung der Rankstöcke 3 ermöglichen neben den statischen Vorteilen die im Querschnitt 9b sichtbar gemachten Vorteile bezüglich Lichtausnutzung, bequemer Zugänglichkeit bei effizienter Raumausnutzung. Ergänzend hierzu ist in Fig. 9c der Längsschnitt gezeigt. Sichtbar wir der flachdach artige Charakter der Gesamtkonstruktion

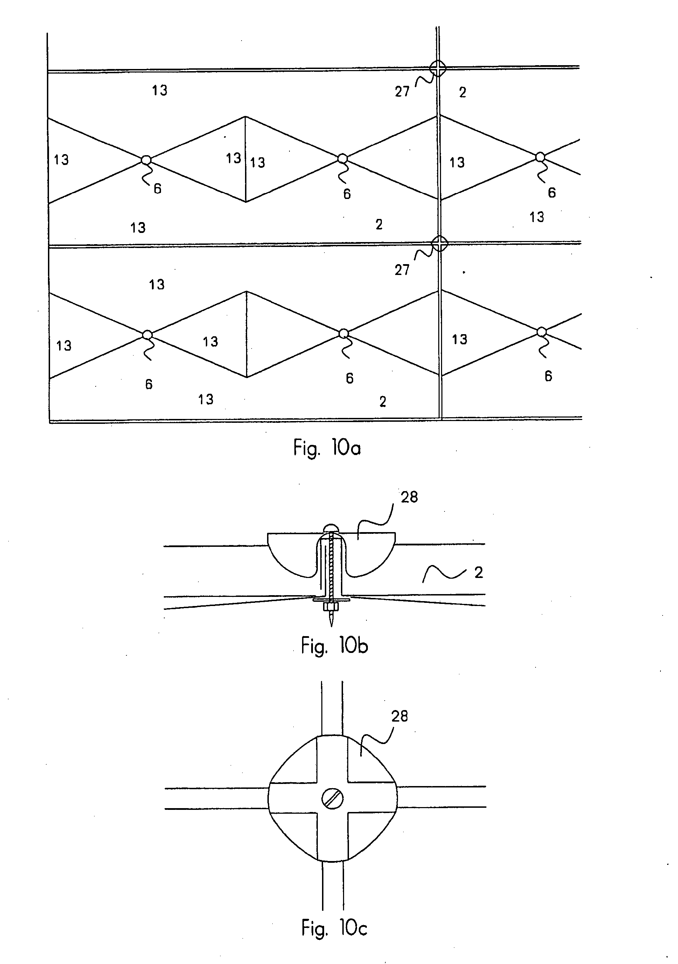

Fig. 10a bis c zeigt mehrere Regenauffangwannen 2 im Verbund, wobei diese an deren Kreuzungspunkt 27 mittels eines Sicherungselementes 28 gegeneinander fixiert sind. Das Sicherungselement 28 ist derart ausgebildet, dass es einseitig von unten montiert werden kann. Fig. 10b zeigt den Schnitt, Fig. 10c die Draufsicht auf das Sicherungselement 28 im Detail.

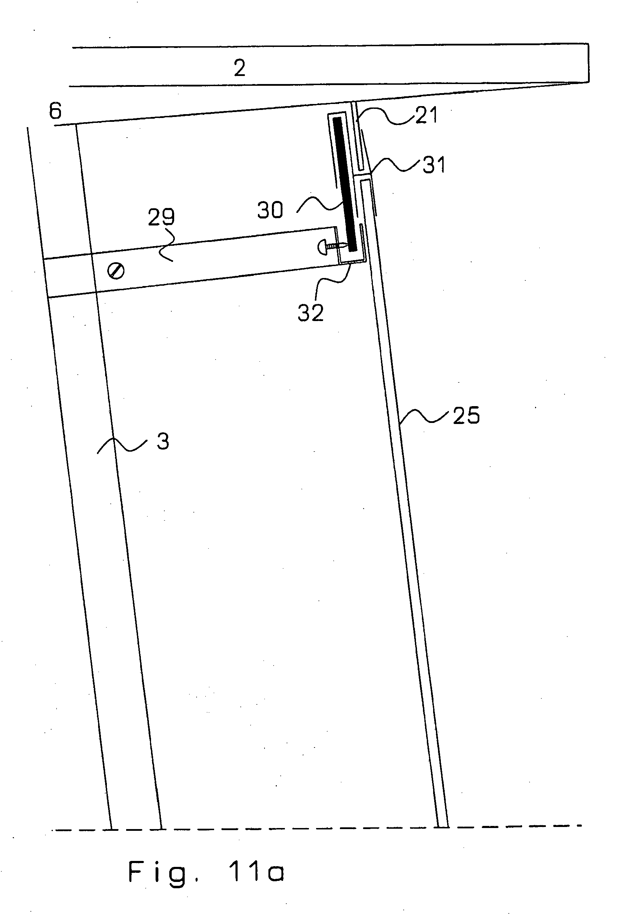

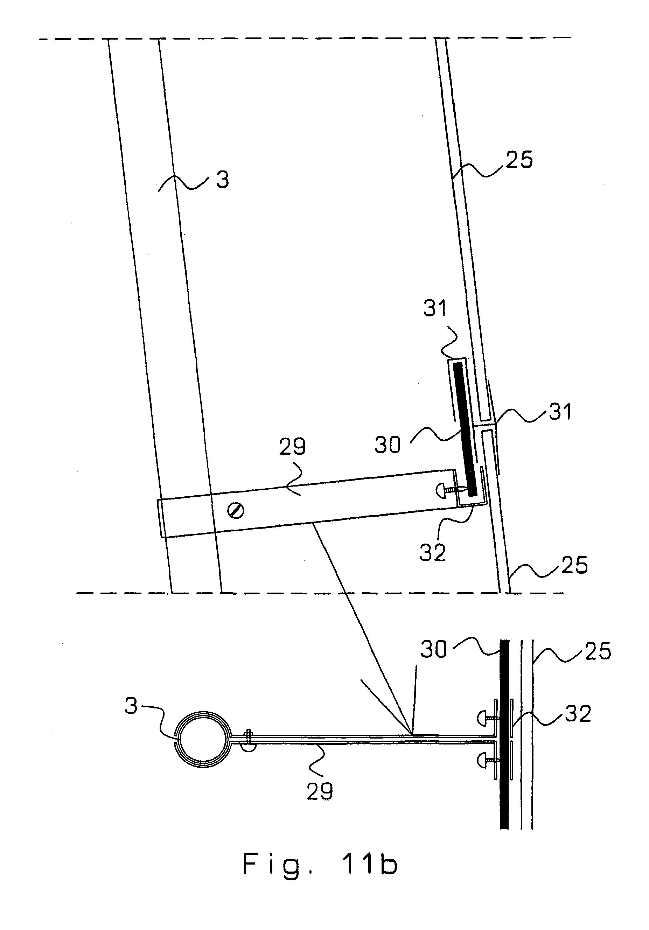

Fig. 11a und Fig. 11b zeigen Details zur Befestigung von Seitenwand- Elementen 25 an den Rankstöcken 3 mittels einer Abstand haltenden Strebe 29, wobei Fig. 11a den Dachanschluss und 11 b zusätzlich eine Draufsicht auf die Abstandsstrebe zeigt. Die Abstandsstreben 29 sind zweiteilig aus Metall gebildet und am Rankrohr 3 wie Klemmschellen befestigt. Ein bevorzugt aus Aluminium hergestelltes und zur Stabilisierung der Seitenwand 25 bestimmtes Flachprofil 30 ist in die vordere Aufnahme 32 eingefügt und ebenfalls mittels Schrauben festgestellt. In das Flachprofil wiederum ist ein bevorzugt aus Kunststoff, besonders bevorzugt aus Hartgummi hergestelltes U-H-Profil 31 eingehängt, welches die Seitenwände 25 in der gewünschten Position hält. Die Streben sind entsprechend den statischen Erfordernissen verteilt.

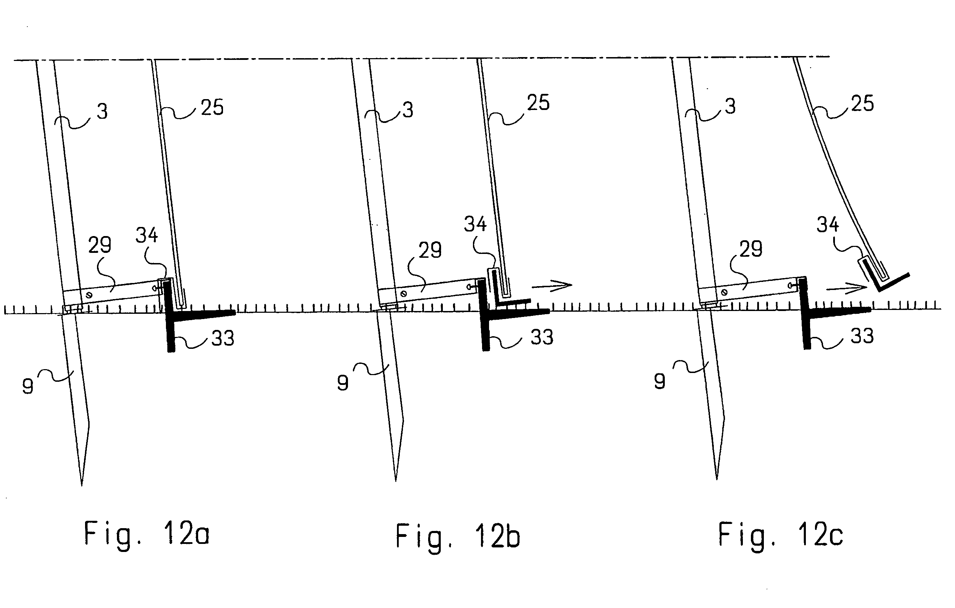

Fig. 12a und Fig.12b zeigen zwei Varianten des Bodenanschlusses der Seitenwände 25. Das im Erdboden 4 halb eingelassene bzw. mit Erde angeschüttete T- Profil 33 dient als Anschlag für die Seitenwand 25. In Fig. 12a ist die Seitenwand mittels der Gummilippe 34 mit dem T- Profil 33 verbunden und bildet einen festen Abschluss. In Fig. 12b ist die Gummilippe 34 um das L-Profil 35 gelegt und bildet einen beweglichen Abschluss, der ein Abspreizen der Seitenwand 25 zu Lüftungszwecken erlaubt, wie in Fig. 12c dargestellt. In diesem Fall ist die Seitenwand 25 mit dem Flachprofil 30 bei der Strebe 29 fest verbunden, der Abspreizmechanismus ist sehr einfach als Hebel ausgeführt.

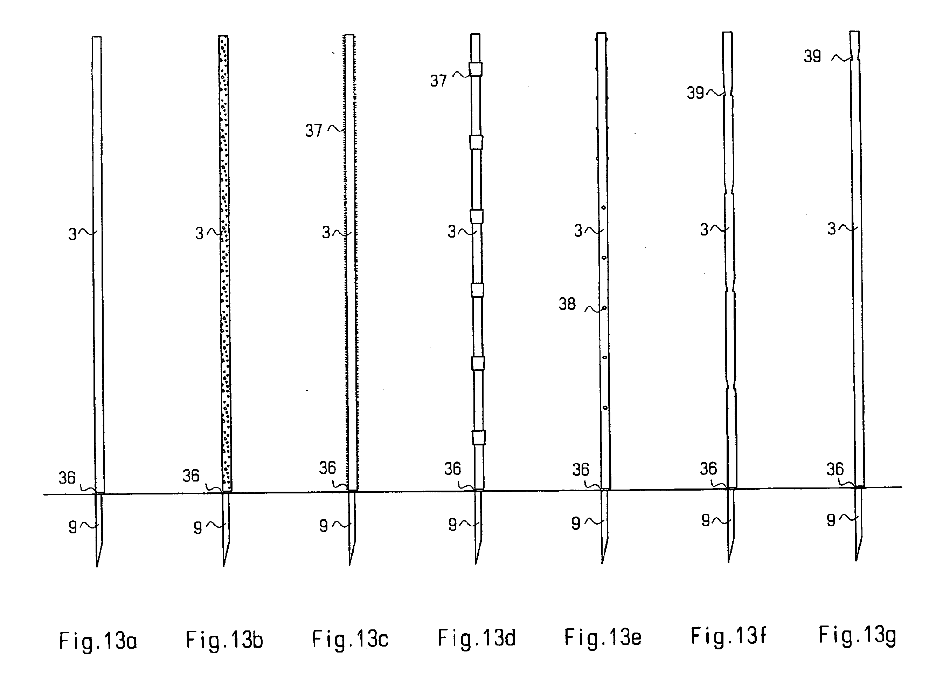

Fig. 13a bis Fig. 13g zeigen unterschiedliche Ausgestaltungsformen von einsetzbaren Rankstöcken 3. Bevorzugtes Material ist Aluminium oder eine Aluminiumlegierung. Fig. 13a zeigt einen Rankstock 3 mit glatter Oberfläche sowie mit einer Erdlanze 9 mit seitlichen Nasen 36, die als Eindrück- oder Einklopfnasen dienen können. Die Erdlanze 9 ist mit dem im Querschnitt quadratischen, rechteckigen oder bevorzugt runden Rohr, mit oder ohne Einbuchtungen, durch Verpressen zusammengefügt.

Der Rankstock 3 aus Fig. 13b entspricht im Wesentlichen dem zuvor beschriebenen und in Fig. 13a gezeigten Rankstock 3, mit dem Unterschied, dass der Schaft 2 mit einer rauen Oberflächenstruktur versehen ist. Ferner weist der Rankstock 3 Bördel und Ausnehmungen auf.

In Fig. 13c ist der Schaft mit einer sich in Umfangsrichtung erstreckenden axial durchgehend angeordneten Riffelung 37 versehen, um den Pflanzen einen guten Halt zu bieten.

Fig. 13d unterscheidet sich von dem Rankstock 3 gemäß Fig. 13c dadurch, dass die Riffelung 37 nur abschnittsweise vorgesehen ist und dass jeweils zwischen zwei axial beabstandeten Riffelabschnitten 37 ein glatter Oberflächenabschnitt vorgesehen ist.

Fig. 13e zeigt einen Rankstock 3, bei dem anstelle von seitlichen Aussparungen Blechschrauben 38 als Rankhilfe und zum Anordnen von Pflanzenhaltern vorgesehen sind.

Fig. 13f zeigt einen Rankstock 3 mit einer Vielzahl von auf zwei voneinander abgewandten Seiten in den Schaft 2 aus Aluminium eingepressten Aussparungen 39 (Ausbuchtungen, Einbuchtungen).

Fig. 13g zeigt eine Ausführungsvariante des als Pflanzrohrstock ausgebildeten Rankstockes 3 mit zwei am axialen Ende vorgesehenen Aussparungen 39. Ansonsten weist der Schaft 2 eine glatte Oberfläche auf.
Sämtliche in den Fig. 13a bis 13g gezeigten Rankstöcke 3 können aluminiumfarben ausgebildet sein, mit einer Farbe versehen oder farbig eloxiert sein.

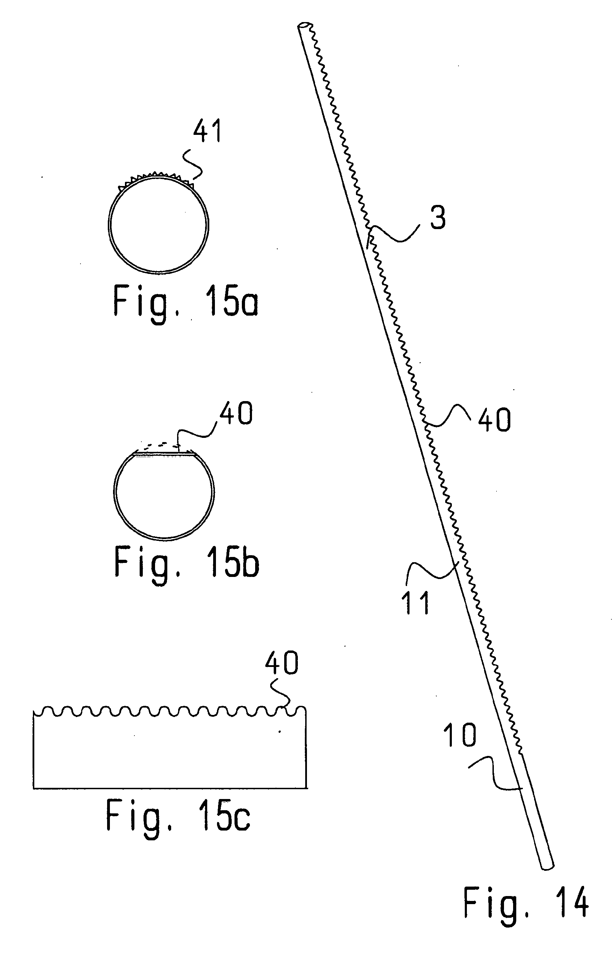

Fig. 14 zeigt eine bevorzugte Ausführungsvariante eines Rankstockes 3. Der Schaftabschnitt 10 des Rankstockes 3 ist auf einer Längs- bzw. Umfangsseite mit einer Rillung 40 (alternativ eine andere Oberflächenstruktur) versehen, wobei sich die Rillung 40 nicht in vollumfänglicher Umfangsrichtung erstreckt, sondern eben nur auf einer Längsseite angeordnet ist. Auf der von der Rillung 40 abgewandten Seite ist der Schaftabschnitt 10 glatt ausgebildet. Insbesondere bei einer Schrägstellung des Rankstockes entfaltet dieser seine Vorteile. Durch die Rillung 40 oder eine andere, nur einseitige Oberflächenstruktur wird die Oberfläche des Rankstockes 3 derartig vergrößert, dass auftreffender Regen nicht wegspritzt, sondern entlang des Rankstockes 3 nach unten am Außenumfang entlang zu laufen beginnt und aufgrund der Schrägstellung auf die glatte Seite strömt, an der entlang er zum Erdreich strömen kann. Zudem bietet die Rillung (alternativ z.B. Rändelung) eine rutschfeste Befestigungsmöglichkeit für Regenauffangwannen und/oder Rollringe in allen Höhenlagen. Nachdem die schrägen Rankstöcke, beispielsweise mit Bohnen bewachsen sind, dienen die Blätter der Pflanzen als Regenauffangflächen und leiten das Regenwasser kaskadenartig auch bei nur leichtem Regen oder Tau sehr ergiebig zu den Wurzeln.

Die in Fig. 14 dargestellte Ausführungsvariante eines Rankstockes 3 kann anstelle einer Rillung, die im Detail in den Fig. 15b und 15c gezeigt ist, auch mit einer in Fig. 15a gezeigten Rändelung 41 realisiert werden. Bei der Rillung 40 erstrecken sich die einzelnen Rillen, wie sich aus Fig. 15b und 15c ergibt in Umfangsrichtung. Bei der Rändelung sind die (feineren) Rillen in Längsrichtung orientiert.

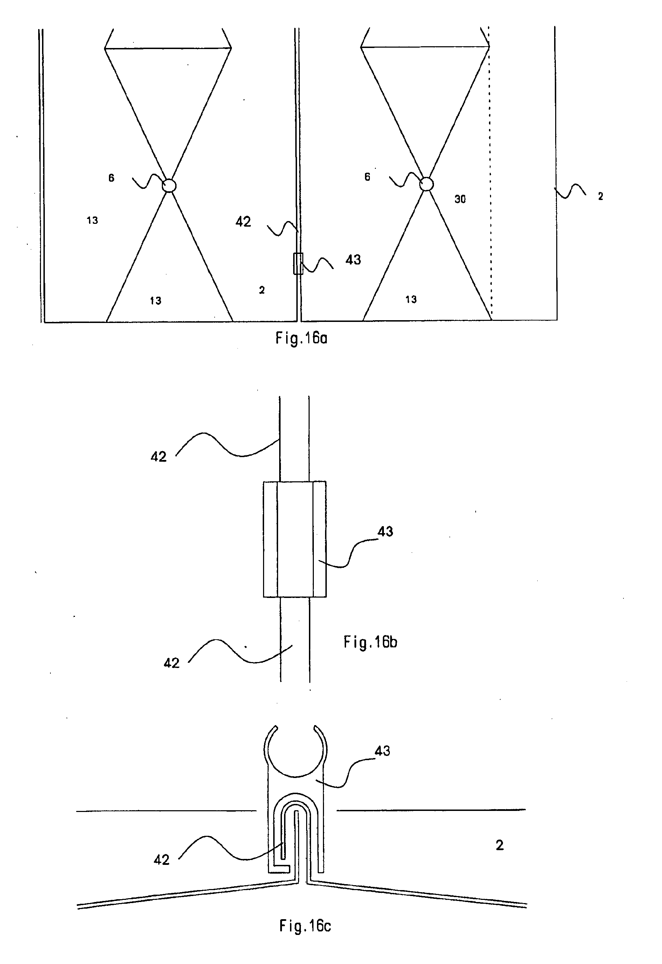

In Fig. 16a bis 16c ist die auf dem Stehfalz 42 der Regenauffangwannen 2 einsteckbare Steckschelle 43 in Aufsichten und einer Ansicht dargestellt. Die darin einsetzbare Wasserleitung 16 ist nicht dargestellt.

### Bezugszeichenliste

- 1: Rankvorrichtung, ggfs Rank- und Bewässerungsvorrichtung
- 2: Regenauffangwanne
- 3: Rankstock
- 4: Erdboden
- 5: Klemmschellen
- 6: Durchgangsloch
- 7: Mittelstock
- 8: Verankerungsabschnitt
- 9: Erdnagel
- 10: Schaftabschnitt
- 11: Löcher Erdnagel
- 12: Eindrückkragen
- 13: Segment
- 14: Wulst
- 15: Sturmspange
- 16: Wasserleitung
- 17: Wasser- Austrittsöffnungen
- 18: Eindrückschulter
- 19: Fixierabschnitt
- 20: Axialanschlag
- 21: Linie Befestigungssteg
- 22: (Regen- oder Gieß-) Wasser
- 23: Ablaufkonus
- 24: Haltespange
- 25: Seitenwand
- 26: Gewächshaus (als System)
- 27: Kreuzungspunkt
- 28: Sicherungselement
- 29: Abstandsstrebe
- 30: Flachprofil
- 31: U-H Profil
- 32: vordere Aufnahme
- 33: T-Profil
- 34: Gummilippe
- 35: L-Profil
- 36: Eindrücknase (ähnlich 12)
- 37: Riffelung
- 38: Blechschrauben
- 39: Aussparungen
- 40: Rillung
- 41: Rändelung
- 42: Stehfalz
- 43: Steckschelle
- 44: Sicke

## Patentansprüche

1. Rank- und Bewässerungsvorrichtung (1) für Pflanzen, umfassend mindestens eine Regenauffangwanne (2),
**dadurch gekennzeichnet,**
• **dass** die Regenauffangwanne (2) von mehreren metallischen Rankstöcken (3) getragen ist, und
• **dass** die metallischen Rankstöcke (3) schräg zur Vertikalen verlaufend angeordnet sind, und
• **dass** die Regenauffangwanne (2) eine Anzahl von Durchgangslöchem (6) aufweist, die von den schräg verlaufenden Rankstöcken (3) durchsetzt sind, derart, dass das Wasser aus der Regenauffangwanne (2) durch die Durchgangslöcher (6) außen entlang der Rankstöcke (3) zum Wurzelwerk der Pflanzen fließen kann,
oder
• **dass** die Regenauffangwanne (2) eine Anzahl von, vorzugsweise konisch konturierten, Ablauftüllen (23) aufweist, die in den schräg angeordneten Rankstöcken (3) aufgenommen sind, derart, dass Wasser durch die als Hohlkörper ausgebildeten Rankstöcke (3) nach unten in Richtung Wurzelwerk fließen kann.

2. Vorrichtung nach Anspruch 1,
**dadurch gekennzeichnet,**
**dass** die Durchgangslöcher einen größeren Durchmesser aufweisen als die, vorzugsweise zylindrisch oder U-förmig konturierten, Rankstöcke (3).

3. Vorrichtung nach Anspruch 2,
**dadurch gekennzeichnet,**
**dass** die Durchgangslöcher kreisrund oder U-förmig konturiert sind.

4. Vorrichtung nach einem der vorhergehenden Ansprüche,
**dadurch gekennzeichnet,**
**dass** die Rankstöcke (3) unter einem Winkel aus einem Winkelbereich zwischen 5° und 25° zur Vertikalen verlaufend angeordnet sind.

5. Vorrichtung nach einem der vorhergehenden Ansprüche,
**dadurch gekennzeichnet,**
**dass** die Rankstöcke (3) derart schräg zur Vertikalen ausgerichtet sind, dass sie den Umfangsrand der von ihnen getragenen Regenauffangwanne (2) seitlich überragen, so dass Regen auf die Rankstöcke (3) auftreffen und an diesen Entlang in Richtung Wurzelwerk von der Pflanze fließen kann.

6. Vorrichtung nach einem der vorhergehenden Ansprüche,
**dadurch gekennzeichnet,**
**dass** die Rankstöcke (3) einen, vorzugsweise metallischen, insbesondere leichtmetallischen, Schaft (11), und einen an diesen angrenzenden, vorzugsweise mit diesem verpressten, insbesondere metallischen, bevorzugt korrosionsbeständigen, Verankerungsabschnitt (9) zum erleichterten Einbringen in das Erdreich aufweisen.

7. Vorrichtung nach Anspruch 6,
**dadurch gekennzeichnet,**
**dass** der Verankerungsabschnitt (9) von einer gebogenen, vorzugsweise als Stanzbiegeteil ausgebildeten, Erdlanze (10) gebildet ist, die bevorzugt eine Anschlagfläche zur Auflage auf dem Erdreich zum Zweck der statischen Stabilisierung aufweist, welche vorzugsweise gleichzeitig als eine, zumindest über einen Teilabschnitt, umlaufende Eindrückschulter zum erleichterten Eindrücken oder Einschlagen des Rankstockes (3) in das Erdreich ausgebildet ist.

8. Vorrichtung nach einem der vorhergehenden Ansprüche,
**dadurch gekennzeichnet,**
**dass** mindestens zwei der Rankstöcke (3) über eine, vorzugsweise unterhalb der Regenauffangwanne (2) angeordnete, Sturmspange (15) aneinander festgelegt sind.

9. Vorrichtung nach einem der vorhergehenden Ansprüche,
**dadurch gekennzeichnet,**
**dass** die bevorzugt aus wetterbeständigem transparenten Kunststoff, vorzugsweise Polycarbonat oder PE, ausgebildete Regenauffangwanne (2) derart ausgeformt, vorzugsweise mit Schrägen versehen, ist, dass das auf die Regenauffangwanne (2) auftreffende Wasser zu den Rankstöcken (3) geleitet wird.

10. Vorrichtung nach einem der vorhergehenden Ansprüche,
**dadurch gekennzeichnet,**
**dass** die Rankstöcke (3) seitliche Aussparungen (39) und/oder Schrauben und/oder eine Riffelung (37) als Rankhilfe und/oder zum Festlegen von Pflanzenhaltem aufweisen.

11. Vorrichtung nach einem der vorhergehenden Ansprüche,
**dadurch gekennzeichnet,**
**dass** die Regenauffangwanne (2) eine runde, oder ovale oder eine quadratische, oder eine rechteckige Umfangskontur aufweist, wobei mehrere Regenauffangwannen (2) aneinander, insbesondere durch Verschränken festgelegt sind und eine Dachfläche bilden.

12. Vorrichtung nach Anspruch 11,
**dadurch gekennzeichnet,**
**dass** die Regenauffangwannen (2) jeweils mindestens eine Wasserleitung (16) tragen, die mit mindestens einer Austrittsöffnung (17) für jede Regenwanne versehen ist, um die Pflanzen bei Regenmangel künstlich bewässern zu können.

13. Vorrichtung nach Anspruch 12,
**dadurch gekennzeichnet,**
**dass** mindestens eine der Regenauffangwannen (2) in mindestens zwei Segmente (13) unterteilt ist, die vorzugsweise in unterschiedliche Richtungen schräg verlaufend ausgebildet sind, wobei jedes Segment (13) einem Rankstock oder einer Gruppe von Rankstöcken zugeordnet ist und wobei für jedes Segment (13) mindestens eine Austrittsöffnung (17) in der Wasserleitung (16) vorgesehen ist.

14. Vorrichtung nach einem der vorhergehenden Ansprüche,
**dadurch gekennzeichnet.**
**dass** zumindest ein Teil der Rankstöcke (3), vorzugsweise über Abstandshalter, mindestens ein Wandelement trägt, vorzugsweise derart. dass ein an mindestens zwei Seiten, vorzugsweise an sämtlichen Seiten geschlossenes Gewächshaus gebildet ist.

15. Vorrichtung nach einem der vorhergehenden Ansprüche,
**dadurch gekennzeichnet,**
**dass** mehrere Regenauffangwannen (2) zu einem Flachdach zusammengesetzt sind.

## Claims

1. A climbing and watering device (1) for plants comprising at least one rainwater collecting pan (2),
**characterised in that**
• the rainwater collecting pan (2) is borne by several metal climbing poles (3) and
• the metal climbing poles (3) are arranged obliquely to the vertical line and
• the rainwater collecting pan (2) has a number of through holes (6) which are penetrated by the obliquely arranged climbing poles (3) in such a way that water from the rainwater collecting pan (2) can flow out of the rainwater collecting pan (2) through the through holes (6) and along the outside of the climbing poles (3) to the roots of the plants,
or **in that**
• the rainwater collecting plan (2) has a number of, preferably conically contoured drainage nozzles (23) arranged in the obliquely arranged climbing poles (3) so that water can flow downwards in the direction of the roots through the climbing poles (3) which are designed as hollow bodies.

2. The device according to claim 1,
**characterised in that**
the through holes have a larger diameter than the climbing poles (3) which are preferably contoured cylindrically or in a U-shape.

3. The device according to claim 2,
**characterised in that**
the through holes have a circular or U-shaped contour.

4. The device according to any one of the preceding claims,
**characterised in that**
the climbing poles (3) are arranged at an angle in an angular range between 5° and 25° to the vertical line.

5. The device according to any one of the preceding claims,
**characterised in that**
the climbing poles (3) are arranged obliquely to the vertical line in such a way that they laterally project beyond the circumferential edge of the rainwater collecting pan (2) borne by them so that rain can hit the climbing poles (3) and flow along them in the direction of the roots of the plant.

6. The device according to any one of the preceding claims,
**characterised in that**
the climbing poles (3) have a metallic, more particularly lightweight metallic, shaft (11) and, adjoining this and preferably pressed thereto, a, more particularly metal, preferably corrosion-resistant, anchoring section (9) for facilitated insertion into the ground.

7. The device according to claim 6,
**characterised in that**
the anchoring section (9) is formed of a curved ground spike (10), preferably designed as a stamped curved element which has a support on the ground for the purpose of static stabilisation which preferably also has a circumferential pressing-in collar, least on a partial section thereof, in order to more easily be able to push or knock the climbing pole (3) into the ground.

8. The device according to any one of the preceding claims,
**characterised in that**
at least two of the climbing poles (3) are connected to each other by means of a storm brace (15) preferably arranged under the rainwater collecting pan (2) .

9. The device according to any one of the preceding claims,
**characterised in that**
the rainwater collecting pan (2), preferably made of weather-resistant, transparent plastic, preferably polycarbonate or PE, is designed in such a way, preferably provided with slopes, that water hitting the rainwater collecting pan (2) is directed to the climbing poles (3).

10. The device according to any one of the preceding claims,
**characterised in that**
the climbing poles (3) have lateral recesses (39) and/or screws and/or rippling (37) as a climbing aid and/or for attaching plant supports.

11. The device according to any one of the preceding claims,
**characterised in that**
the rainwater collecting pan (2) has a round or oval or a quadratic or a rectangular circumferential contour, wherein several rainwater collecting pans (2) can be attached to each other, more particularly through interlocking and form a roof surface.

12. The device according to claim 11,
**characterised in that**
the rainwater collecting pans (2) each carry at least one water pipe (16) which is provided with at least one outlet opening (17) for each rainwater pan in order to be able to artificially irrigate the plants in the event of insufficient rainfall.

13. The device according to claim 12,
**characterised in that**
at least one of the rainwater collecting pans (2) is divided into at least two segments (13) which preferably run in different directions, wherein each segment (13) is assigned to one climbing pole or a group of climbing poles and wherein for each segment (13) at least one outlet opening (17) is provided in the water pipe (16).

14. The device according to any one of the preceding claims,
**characterised in that**
at least one part of the climbing poles (3) bears at least one wall element, preferably via spacers, preferably in such a way that on at least two sides, preferably on all sides, an enclosed greenhouse is formed.

15. The device according to any one of the preceding claims,
**characterised in that**
several rainwater collecting pans (2) are put together to form a flat roof.

## Revendications

1. Dispositif de tuteurage et d'arrosage (1) pour plantes, comprenant au moins une cuvette de collecte d'eau de pluie (2), caractérisé en ce
* que la cuvette de collecte d'eau de pluie (2) est supportée par plusieurs bâtons de tuteurage (3) métalliques, et
* que les bâtons de tuteurage (3) métalliques sont disposés de manière à s'étendre en biais par rapport à la verticale, et
* que la cuvette de collecte d'eau de pluie (2) présente une pluralité de trous de passage (6) qui sont traversés par les bâtons de tuteurage (3) qui s'étendent en biais de telle sorte que l'eau sortant de la cuvette de collecte d'eau de pluie (2) peut s'écouler à travers les trous de passage (6) à l'extérieur le long des bâtons de tuteurage (3) vers les racines des plantes, ou
* que la cuvette de collecte d'eau de pluie (2) présente une pluralité de douilles d'écoulement (23), de préférence à contour conique, qui sont accueillies dans les bâtons de tuteurage (3) qui s'étendent en biais de telle sorte que l'eau peut s'écouler à travers les bâtons de tuteurage (3) réalisés en tant que corps creux vers le bas en direction des racines.

2. Dispositif selon la revendication 1, **caractérisé en ce que** les trous de passage présentent un diamètre plus grand que les bâtons de tuteurage (3), de préférence au contour cylindrique ou en forme de U.

3. Dispositif selon la revendication 2, **caractérisé en ce que** les trous de passage présentent un contour circulaire ou en forme de U.

4. Dispositif selon l'une des revendications précédentes, **caractérisé en ce que** les bâtons de tuteurage (3) sont disposés de manière à s'étendre sous un angle compris dans la plage angulaire de 5° à 25° par rapport à la verticale.

5. Dispositif selon l'une des revendications précédentes, **caractérisé en ce que** les bâtons de tuteurage (3) sont orientés en biais par rapport à la verticale de telle sorte qu'ils dépassent latéralement du bord périphérique de la cuvette de collecte d'eau de pluie (2) qu'ils supportent, de sorte que la pluie tombe sur les bâtons de tuteurage (3) et peut s'écouler le long de ceux-ci en direction des racines des plantes.

6. Dispositif selon l'une des revendications précédentes, **caractérisé en ce que** les bâtons de tuteurage (3) présentent une tige (11) de préférence métallique, notamment en métal léger, et une portion d'ancrage (9) juxtaposée à celle-ci, de préférence usinée par pressage avec celle-ci, notamment métallique, préférablement résistante à la corrosion, afin de faciliter l'introduction dans la terre.

7. Dispositif selon la revendication 6, **caractérisé en ce que** la portion d'ancrage (9) est formée par une lance enterrée (10) courbée, de préférence réalisée sous la forme d'une pièce découpée et pliée, laquelle présente préférablement une surface de butée à appliquer sur la terre dans un but de stabilisation statique, laquelle est de préférence en même temps réalisée sous la forme d'un épaulement d'enfoncement, périphérique au moins sur une portion partielle, pour faciliter l'enfoncement par poussée ou frappe du bâton de tuteurage (3) dans la terre.

8. Dispositif selon l'une des revendications précédentes, **caractérisé en ce qu'**au moins deux des bâtons de tuteurage (3) sont fixés l'un à l'autre par le biais d'une agrafe de contreventement (15), disposée de préférence au-dessous de la cuvette de collecte d'eau de pluie (2).

9. Dispositif selon l'une des revendications précédentes, **caractérisé en ce que** la cuvette de collecte d'eau de pluie (2), réalisée de préférence dans une matière plastique transparente résistante aux intempéries, préférablement du polycarbonate ou du PE, est façonnée, de préférence munie de chanfreins, de telle sorte que l'eau qui tombe sur la cuvette de collecte d'eau de pluie (2) est guidée vers les bâtons de tuteurage (3).

10. Dispositif selon l'une des revendications précédentes, **caractérisé en ce que** les bâtons de tuteurage (3) présentent des évidements latéraux (39) et/ou des hélices et/ou des cannelures (37) comme aide au tuteurage et/ou pour fixer des supports de plante.

11. Dispositif selon l'une des revendications précédentes, **caractérisé en ce que** la cuvette de collecte d'eau de pluie (2) présente un contour périphérique rond, ou ovale ou carré ou rectangulaire, plusieurs cuvettes de collecte d'eau de pluie (2) étant fixées les unes contre les autres, notamment par entrecroisement, et formant une surface de toiture.

12. Dispositif selon la revendication 11, **caractérisé en ce que** les cuvettes de collecte d'eau de pluie (2) supportent respectivement au moins une conduite d'eau (16), laquelle est munie d'au moins une ouverture de sortie (17) pour chaque cuvette pour eau de pluie afin de pouvoir arroser artificiellement les plantes en cas de manque de pluie.

13. Dispositif selon la revendication 12, **caractérisé en ce qu'**au moins l'une des cuvettes de collecte d'eau de pluie (2) est divisée en au moins deux segments (13) qui sont configurés pour s'étendre en biais de préférence dans des directions différentes, chaque segment (13) étant associé à un bâton de tuteurage ou à un groupe de bâtons de tuteurage et au moins une ouverture de sortie (17) étant prévue dans la conduite d'eau (16) pour chaque segment (13).

14. Dispositif selon l'une des revendications précédentes, **caractérisé en ce qu'**au moins une partie des bâtons de tuteurage (3) supporte au moins un élément de paroi, de préférence par le biais d'entretoises, préférablement de manière à former une serre fermée sur au moins deux côtés, de préférence de tous les côtés.

15. Dispositif selon l'une des revendications précédentes, **caractérisé en ce que** plusieurs cuvettes de collecte d'eau de pluie (2) sont assemblées en une toiture plate.
